(19) Europäisches Patentamt
European Patent Office
Office européen des brevets

(11) **EP 1 656 546 B1**

(12) **FASCICULE DE BREVET EUROPEEN**

(45) Date de publication et mention
de la délivrance du brevet:
**14.05.2008 Bulletin 2008/20**

(21) Numéro de dépôt: **04767794.3**

(22) Date de dépôt: **27.07.2004**

(51) Int Cl.:
***G01N 3/00*** *(2006.01)*

(86) Numéro de dépôt international:
**PCT/FR2004/002012**

(87) Numéro de publication internationale:
**WO 2005/015167 (17.02.2005 Gazette 2005/07)**

(54) **PROCEDE DE DETERMINATION DES CONTRAINTES, DEFORMATIONS, ENDOMMAGEMENT DE PIECES CONSTITUEES D'UN MATERIAU SOLIDE**

VERFAHREN ZUR BESTIMMUNG VON SPANNUNGEN UND DEFORMATIONEN IN AUS EINEM FESTEN MATERIAL BESTEHENDEN WERKSTÜCKEN UND DARAN AUFGETRETENER SCHÄDEN

METHOD FOR DETERMINING STRESSES AND DEFORMATIONS IN WORKPIECES CONSISTING OF A SOLID MATERIAL, AND DAMAGE TO THE SAME

(84) Etats contractants désignés:
**DE ES FR GB IT**

(30) Priorité: **28.07.2003 FR 0309252**

(43) Date de publication de la demande:
**17.05.2006 Bulletin 2006/20**

(73) Titulaire: **Electricité de France**
**75008 Paris (FR)**

(72) Inventeurs:
• **ROUSSELIER, Gilles**
**F-77300 Fontainebleau (FR)**

• **LECLERCQ, Sylvain**
**F-77210 Samoreau (FR)**

(74) Mandataire: **Lagrange, Jacques Etienne M.M. et al**
**Cabinet Lavoix**
**2, place d'Estienne d'Orves**
**75441 Paris Cedex 09 (FR)**

(56) Documents cités:
**EP-A- 0 867 708          US-A- 4 567 774**

## EP 1 656 546 B1

**Description**

La présente invention concerne un procédé pour déterminer les effets d'une sollicitation mécanique sur un objet constitué d'un matériau solide.

Dans de nombreux domaines techniques, on a besoin de déterminer l'incidence de sollicitations mécaniques sur des pièces, notamment des pièces métalliques, soit afin d'optimiser des procédés de fabrication comportant des opérations de mise en forme, soit afin de prévoir le comportement en service de pièces dans des conditions complexes.

Les procédés de mise en forme concernés sont les procédés de mise en forme par déformation plastique tels que l'emboutissage de tôles, l'étirage de tubes, le forgeage de pièces de mécanique. Ces procédés peuvent avoir une incidence importante sur les propriétés du matériau constitutif des pièces concernées, et il est important de pouvoir prévoir cette incidence de façon à permettre d'évaluer à priori le comportement en service des pièces obtenues.

Les sollicitations en service des pièces sont diverses et correspondent à toutes les sollicitations que l'on peut rencontrer, par exemple à l'effet d'efforts permanents, l'effet d'efforts appliqués progressivement à des vitesses plus ou moins élevées, d'efforts appliqués de façon périodique, d'efforts appliqués dans des conditions de température ambiante ou bien d'efforts appliqués dans des conditions de température soit élevée soit très basse.

Afin d'évaluer les effets de ces sollicitations mécaniques sur des pièces, on utilise de façon connue des méthodes de calcul numérique, en mode élastique ou anélastique. Ces méthodes de calcul sont, notamment, les méthodes par différences finies et les méthodes de type Galerkin reposant sur une décomposition sur des fonctions de base dont un type particulier est la méthode par éléments finis. Par "mode anélastique", on entend tout mode de comportement qui n'est pas élastique réversible, c'est à dire tout mode de comportement plastique, plastique dépendant du temps, ou viscoplastique, plastique dépendant de la température, plastique résultant de transformation de phases. Ces calculs utilisent une modélisation du comportement du matériau sous l'effet des contraintes, représentée par une loi reliant les contraintes aux déformations. De façon classique, on utilise des lois de comportement macroscopiques qui correspondent à des représentations phénoménologiques des phénomènes de déformation, c'est-à-dire des représentations qui ne tiennent pas compte des phénomènes physiques fondamentaux sous-jacents. De tels modèles ont l'avantage d'utiliser un nombre de variables relativement limité ce qui conduit à des calculs suffisamment peu volumineux pour pouvoir être utilisés dans les processus de conception industriels. En revanche, ce type de modèle présente l'inconvénient de ne pas permettre de modéliser convenablement l'effet de la microstructure des matériaux sur leurs propriétés, et en particulier sur les propriétés anisotropes, et plus encore sur l'évolution de ces propriétés anisotropes sous l'effet des sollicitations et des déformations.

Afin de remédier à cet inconvénient, il a été proposé d'utiliser des modèles de comportement de matériaux, dits "modèles polycristallins", dans lesquels le matériau est représenté par une pluralité de grains ayant la structure cristallographique et les propriétés d'un grain du matériau. Chaque grain est caractérisé notamment par son orientation et par les systèmes de glissement propres à sa structure cristallographique. Dans ces conditions, le nombre de systèmes de glissements est important puisqu'il va de douze pour un cristal cubique à faces centrées à trente pour un cristal hexagonal compact. De tels modèles ont l'avantage de permettre une représentation fine du comportement du matériau, mais l'inconvénient de nécessiter l'utilisation d'un nombre très important de variables. Ce grand nombre de variables conduit à des temps de calculs absolument prohibitifs qui ne permettent pas l'utilisation de tels modèles dans un contexte industriel. Enfin aucun de ces modèles ne permet de prendre en compte les endommagements microscopiques des matériaux, et donc ces modèles ne permettent pas de prévoir les ruptures en service.

Le but de la présente invention est de remédier à ces inconvénients en proposant un procédé pour déterminer les effets d'une sollicitation mécanique sur un objet constitué d'un matériau solide qui permette de simuler de façon fine l'évolution des propriétés d'un matériau anisotrope, en particulier d'un matériau polycristallin, en utilisant un nombre suffisamment restreint de variables pour que les temps de calcul soient raisonnables et permettent de faire des simulations dans un contexte industriel, tout en permettant de prendre en compte les endommagements du matériau.

A cet effet, l'invention a pour objet un procédé pour déterminer les effets des sollicitations mécaniques sur une pièce constituée d'un matériau solide, selon lequel on calcule les déformations et les contraintes engendrées par la sollicitation mécanique en une pluralité de points de la pièce au moyen d'une méthode de calcul numérique en mode anélastique, dans lequel le comportement du matériau solide est représenté par un modèle de comportement microscopique polycristallin utilisant une pluralité de briques "grain" ayant chacune une orientation et une fraction volumique, dont les déformations sont déterminées à partir d'une pluralité de systèmes de glissement propres au matériau solide, la trace du tenseur des déformations plastiques microscopiques de chaque brique "grain" étant nulle, les orientations distinctes et les fractions volumiques correspondant à des briques "grain" étant représentatives de l'anisotropie du matériau solide. Selon l'invention, le nombre de briques "grains" est inférieur ou égal à dix et le nombre de systèmes de glissement utilisés dans le modèle est inférieur ou égal à six. En outre, le modèle microscopique polycristallin peut éventuellement utiliser jusqu'à sept briques "joints de grains" ayant chacune une orientation et une fraction volumique, et dont les déformations sont déterminées à partir d'au moins un système d'ouverture, la trace du tenseur des déformations plastiques microscopiques de chaque brique "joint de grain" étant positive. Le modèle peut également utiliser éventuellement une brique "trou" ayant une fraction volumique variable, dont les déformations plastiques sont purement volumiques et dont la trace du tenseur des déformations plastiques microscopiques est positive.

De préférence, les six systèmes de glissement associés à une brique "grain" définis dans un repère orthonormé associé à la brique "grain" définis par les normales au plan de glissement et par les directions de glissement sont tels que le double de la matrice d'orientation associée à chaque système de glissement n'est constitué que de "0", de "-1" et de "1".

Pour un matériau isotrope à structure cubique les déformations sont déterminées de préférence à partir de deux familles de trois systèmes de glissement, une première famille correspondant aux faces du cube cristallin, et la deuxième famille correspondant aux plans de 45° de ces faces. De préférence le nombre de briques "grain" est égal à sept et les briques "grain" sont obtenues par symétrisation de deux briques "grain" primitives situées sur les grands cercles à 45° de la figure de pôles.

On peut en outre déterminer l'évolution de la texture du matériau en calculant la rotation $Q$ du réseau cristallin de chaque brique "grain" par rapport à un repère corotationnel. Lorsque le matériau est isotrope à structure cubique, le nombre de briques "grain" est alors de préférence égal à dix.

On peut également déterminer l'avancement d'une transformation de phase. Pour cela, on peut attribuer à chaque brique "grain", des caractéristiques fonction de l'avancement de la transformation de phase.

D'une façon générale, les orientations et les fractions volumiques des briques "grain" peuvent être déterminées par ajustement à partir d'essais de traction biaxiale et de traction torsion.

En l'absence de brique "trou", le modèle de localisation pour le passage du niveau macroscopique au niveau microscopique pour une brique "grain", permettant de calculer le tenseur des contraintes microscopiques $\underline{\underline{\sigma}}_g$ dans la brique "grain" en fonction du tenseur des contraintes macroscopiques $\underline{\underline{\Sigma}}$ et du tenseur $\underline{\underline{\varepsilon}}_g^{\,P}$ des déformations plastiques microscopiques dans la brique "grain" et du tenseur $\underline{\underline{E}}^p$ des déformations plastiques macroscopiques s'écrit :

$$\underline{\underline{\sigma}}_g = \underline{\underline{\Sigma}} + 2\mu(1-\beta)\,[\eta\,(\underline{\underline{1}}\otimes\underline{\underline{1}}) + \alpha\underline{\underline{1}}]\,(\underline{\underline{E}}^{\,P} - \underline{\underline{\varepsilon}}_g^{\,P})$$

Dans cette formule $\alpha$ et $\eta$ sont deux coefficients dépendant d'une part du matériau et d'autre part de la valeur maximale atteinte au cours de la déformation par le deuxième invariant de von Mises de la déformation plastique macroscopique.

De préférence, lorsque les calculs sont des calculs par éléments finis, on associe une seule brique "grain" et éventuellement une brique "trou" ou une brique "joint de grain" à chacun des points d'intégration de la méthode de calcul par éléments finis ; la répartition des briques entre les points d'intégration de la méthode de calcul étant effectuée de telle sorte que cette répartition soit homogène.

La méthode de calcul par éléments finis utilisée peut être une méthode de calcul mécanique ou thermo-mécanique faisant intervenir le temps.

Dans ce cas, lorsqu'on utilise une brique "trou", la fraction volumique de la brique "trou" n'est pas nulle à l'instant initial des calculs.

Lorsque le nombre de briques "joint de grain" ou de briques "trou" est supérieur ou égal à un, on peut définir un critère tel que, lorsqu'en un point de l'objet le critère est satisfait, on attribue au point considéré une résistance mécanique du matériau nulle, de façon à simuler la présence d'une fissure.

L'objet en matériau solide est par exemple une pièce métallique soumise à une sollicitation mécanique associée à une opération de mise en forme par déformation plastique, notamment telle que l'emboutissage, l'étirage, le laminage, le cintrage ou le forgeage. Cette liste de procédés de mise en forme par déformation plastique n'est pas limitative.

L'objet peut également être une pièce métallique soumise à une sollicitation mécanique correspondant à l'utilisation de la pièce. L'utilisation de la pièce pouvant engendrer notamment des phénomènes de fluage, de fatigue, ou de fatigue-fluage.

Le procédé selon l'invention peut être utilisé pour évaluer l'effet des procédés de mise en forme, tels que l'emboutissage de tôles ou l'extrusion d'un tube, sur les propriétés des matériaux. Les résultats obtenus peuvent être utilisés par exemple dans des modèles de simulation de tests de résistance aux chocs de véhicules automobiles.

Le procédé selon l'invention peut également être utilisé pour simuler la fabrication de boîtes métalliques telles que des canettes, obtenues par emboutissage, de façon à en déterminer les propriétés d'emploi en tenant compte des phénomènes tels que les cornes d'emboutissage résultant de l'anisotropie du matériau.

Le procédé selon l'invention peut aussi être utilisé pour simuler la fabrication de tubes d'échangeurs de chaleur en alliage de nickel pour les générateurs de vapeur ou pour simuler la fabrication de gaines en alliage de zirconium pour combustible de centrales nucléaires, de façon à mieux déterminer les propriétés initiales de ces pièces.

L'introduction de briques "joint de grain" et de briques "trou" dans le modèle permet de simuler les endommagements microscopiques du matériau et donc de prévoir les ruptures ou les risques de rupture en service. De ce fait, le procédé selon l'invention peut également être utilisé pour étudier le comportement et évaluer la durée de vie des installations. En particulier dans le domaine des centrales nucléaires pour prévoir la durée de vie de composants tels que les cuves, les générateurs de vapeur, les tuyauteries, les gaines de crayons combustibles, tous composants soumis à des charges complexes.

Pour les centrales thermiques classiques, le procédé peut être utilisé pour prévoir la durée de vie d'équipements soumis à des phénomènes de fluage.

Dans l'aéronautique, le procédé peut être utilisé pour la prévision de la durée de vie des disques et des ailettes des réacteurs soumis à des phénomènes de fluage ou de fatigue-fluage. Le fluage est le mode d'endommagement d'une pièce soumise à un chargement maintenu pendant une longue durée. La fatigue est le mode d'endommagement d'une pièce soumise à un grand nombre de cycles de chargement successifs. La fatigue-fluage est la combinaison de ces deux modes d'endommagement, par exemple lorsque les cycles de chargement comportent un maintien de longue durée à contrainte élevée.

Ces utilisations ne sont données qu'à titre d'exemple et l'homme du métier saura adapter le procédé à toute situation particulière faisant intervenir des phénomènes de plasticité ou de fluage.

L'invention va être maintenant décrite plus en détail en regard des figures annexées dans lesquelles :

- la figure 1 représente les six systèmes de glissement utilisés par le modèle polycristallin selon l'invention.
- la figure 2 représente les six systèmes de glissements utilisés pour représenter le comportement d'un cristal cubique.
- la figure 3 est la figure de pôles des briques "grain" représentant un matériau isotrope.
- la figure 4 représente les six systèmes de glissement utilisés pour représenter le comportement d'un cristal hexagonal compact.
- la figure 5 est la figure de pôles des briques "joint de grain" d'un modèle d'endommagement intergranulaire.
- la figure 6 représente l'affectation des briques aux points de Gauss d'un élément de calcul par éléments finis.
- la figure 7 représente l'affectation des briques aux points de Gauss d'un élément d'une coque.
- la figure 8 est la figure de pôles des briques "grain" utilisées pour représenter la texture d'un matériau initialement isotrope.
- la figure 9 montre les résultats de calculs correspondant à un essai de traction biaxiale sur un tube en Zircaloy recristallisé.

Alors que dans les modèles de comportement polycristallins connus on utilise autant de systèmes de glissement qu'il en existe dans le cristal réel, de douze à trente selon la nature du cristal, les inventeurs ont découvert de façon nouvelle qu'une bonne représentation de la déformation d'un cristal pouvait être obtenue en utilisant seulement six systèmes de glissement distincts bien choisis.

Alors que les modèles polycristallins connus considèrent qu'il est nécessaire d'utiliser autant de grains qu'il y a d'orientations effectives des grains dans le matériau réel, les inventeurs ont découvert de façon nouvelle, qu'il est possible d'obtenir une bonne représentation du comportement du matériau en utilisant un nombre de grains restreint correspondant à au plus dix orientations différentes des grains.

Les inventeurs ont également découvert de façon nouvelle qu'il était possible dans tous les cas de chargement, notamment cycliques, et pour les briques "grains" comme pour les briques "joint de grain", d'obtenir une bonne représentation des matériaux en utilisant des modèles de changement d'échelle permettant de faire le passage de l'échelle macroscopique à l'échelle microscopique et inversement qui ne fasse pas intervenir de tenseur supplémentaire mais qui, à la place de ces tenseurs, utilise des paramètres scalaires.

En outre, les inventeurs ont constaté de façon nouvelle qu'il n'était pas indispensable d'affecter l'ensemble des grains du modèle de comportement à l'ensemble des points de calcul, et dans le cas du calcul par la méthode des éléments finis, à l'ensemble des points d'intégration de la méthode par éléments finis, mais qu'il était possible d'obtenir une précision excellente en affectant un nombre réduit de grains à chacun des points de calculs, et dans le cas de calcul par méthode des éléments finis, un grain à chacun des points de calcul de la méthode considérée.

Enfin, les inventeurs ont découvert de façon nouvelle, qu'il était possible de simuler l'endommagement à l'échelle microscopique en utilisant des modèles de joint de grains simples qui permettent de simuler les phénomènes d'endommagement intergranulaires ou d'utiliser des modèles de cavités pour modéliser l'endommagement ductile des matériaux.

Ainsi, l'invention se distingue des méthodes de calcul numérique connues par la nature du modèle de comportement polycristallin de matériau, et par la façon de l'incorporer dans la méthode de calcul numérique.

Afin de bien faire comprendre l'invention, on va considérer le cas particulier de la méthode de calcul par éléments finis. On va tout d'abord rappeler quelques notions sur les techniques de calculs par cette méthode et sur les modèles de comportement de matériaux de type polycristallin, puis on va expliquer comment, selon l'invention, on construit un modèle de comportement polycristallin performant, et on va indiquer comment on incorpore ce modèle de comportement polycristallin dans la méthode de calcul par éléments finis.

De façon classique, pour simuler par un calcul par éléments finis le comportement d'un objet soumis à des sollicitations mécaniques, on construit une représentation de l'objet matériel considéré à l'aide d'un maillage, et on identifie les sollicitations mécaniques extérieures auxquelles il va être soumis. Puis de façon connue en elle-même, on calcule par itération, les contraintes et les déformations à des instants successifs séparés par un pas de temps $\Delta t$. Ces calculs font intervenir un modèle de comportement du matériau.

Dans le cas d'un calcul par éléments finis utilisant un modèle de comportement du matériau du type "modèle polycristallin", à un instant déterminé t, on connaît pour chacune des mailles du maillage, le tenseur des contraintes macroscopiques $\underline{E}$ et le tenseur des déformations macroscopiques $\underline{E}$ qu'on peut décomposer en un tenseur des déformations élastiques $\underline{E}^e$ et un tenseur des déformations plastiques $\underline{E}^P$ et pour chacun des grains du modèle polycristallin, le tenseur des déformations plastiques microscopiques $\underset{=g}{\varepsilon}^{P}$.

A l'aide d'un modèle de localisation permettant le passage de l'échelle macroscopique à l'échelle microscopique, on détermine le tenseur des contraintes $\underline{\sigma}_g$ dans chacun des grains du modèle polycristallin.

A l'aide d'un modèle de comportement anélastique tel qu'un modèle plastique ou viscoplastique (de tels modèles sont connus en eux-mêmes de l'homme du métier), et des systèmes de glissement du grain, on détermine le tenseur des vitesses de déformation microscopiques $\underset{=g}{\dot{\varepsilon}}^{P}$ de chaque grain.

En intégrant les vitesses de déformations sur un intervalle de temps $\Delta t$, on calcule les déformations plastiques microscopiques $\underset{=g}{\varepsilon}^{P}$ à l'instant t + $\Delta t$.

En utilisant un modèle d'homogénéisation permettant le passage de l'échelle microscopique à l'échelle macroscopique, on détermine alors les tenseurs des déformations $\underline{E}$ et des contraintes $\underline{\Sigma}$ macroscopiques à l'instant t + $\Delta t$. On peut alors recommencer le calcul et ainsi déterminer l'évolution au cours du temps des contraintes et des déformations dans l'objet étudié.

Pour mettre en oeuvre une méthode de calcul numérique du type de celle qui vient d'être décrite, on utilise trois repères:

- un repère global, ou repère du laboratoire, ($L_1$, $L_2$, $L_3$) qui est absolu et qui sert de référence pour la description de l'objet à étudier. Selon la nature de l'objet étudié, ce repère permet de repérer chaque point de l'objet par ses coordonnées cartésiennes ou par ses coordonnées cylindriques, ou par ses coordonnées sphériques.
- des repères locaux macroscopiques orthonormés, associés à chacun des points de l'objet étudié. Ainsi, à chaque point, et en particulier, à chaque point pour lequel on effectue un calcul, on associe un repère local macroscopique. Ce repère est un repère orthonormé dont la position et l'orientation par rapport au repère global peut évoluer au fur et à mesure que l'objet étudié se déforme.
- des repères locaux microscopiques orthonormés associés à chacune des "briques" du modèle polycristallin et qui servent à décrire les déformations microscopiques de chaque brique. L'orientation du repère local microscopique d'une "brique" associée à un point de l'objet étudié représente l'orientation de ce grain par rapport au repère local macroscopique du point considéré.

Par la suite on appellera ($X_1$, $X_2$, $X_3$) un repère local macroscopique et ($x_1$, $x_2$, $x_3$) un repère local microscopique.

On va maintenant décrire le modèle polycristallin utilisé dans l'invention.

Selon l'invention, pour construire le modèle polycristallin, on utilise des briques élémentaires de trois natures différentes :

- des briques "grains" qui représentent le comportement de grains cristallins ;
- les briques "joints de grains" qui représentent le comportement de joints de grains ;
- les briques "trou" qui représentent des cavités.

Les briques "grains" permettent de représenter le matériau en l'absence d'endommagement microscopique. Les briques "joints de grains" permettent de représenter des endommagements du type intergranulaire. Les briques "trou" permettent de représenter les endommagements du type ductile.

On va maintenant décrire d'abord les briques "grains", puis les briques "joints de grains" et enfin les briques "trous".

De façon connue, à chaque brique "grain" qui est l'équivalent des "grains" utilisés dans les modèles polycristallins connus, on associe des systèmes de glissements, des lois de comportement du matériau pour chacun des systèmes de glissement, une orientation de la brique "grain" par rapport à un repère lié à l'objet que l'on veut étudier, et enfin une fraction volumique f.

Selon l'invention, et quelle que soit la nature cristallographique du matériau solide considéré, on attribue à la brique "grain" six systèmes de glissement. De façon connue, chaque système est défini par la normale à un plan de glissement et par une direction de glissement, ce qui permet d'associer à chaque système de glissement une matrice d'orientation. Dans un repère local microscopique orthonormé $(x_1, x_2, x_3)$ lié à la brique "grain", selon l'invention, on choisit les systèmes de glissement de telle sorte que les doubles des matrices d'orientation, $\underline{m}_s$ des systèmes de glissement ne soient constitués que de 0, 1, -1.

Si $\underline{n}_s$ est le vecteur normal au plan du système de glissement d'indice s, et $\underline{l}_s$ le vecteur de la direction de glissement de ce système de glissement, on a par définition :

$$2\,\underline{\underline{m}}_s \;=\; (\,\underline{n}_s \otimes \underline{l}_s + \underline{l}_s \otimes \underline{n}_s\,)$$

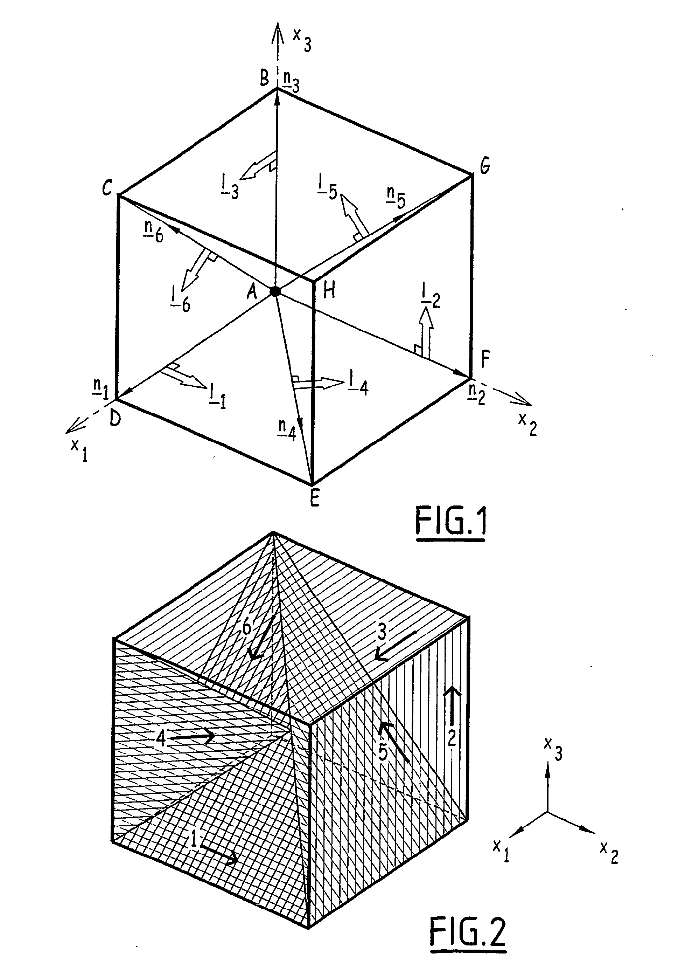

Avec ces définitions, les systèmes de glissement, représentés à la figure 1, sont les suivants :

$$s = 1 \quad \underline{n}_s = \quad (1 \quad\quad 0 \quad\quad 0)$$
$$\underline{l}_s = \quad (0 \quad\quad 1 \quad\quad 0)$$

$$2\,\underline{\underline{m}}_s = \begin{vmatrix} 0 & 1 & 0 \\ 1 & 0 & 0 \\ 0 & 0 & 0 \end{vmatrix}$$

$$s = 2 \quad \underline{n}_s = \quad (0 \quad\quad 1 \quad\quad 0)$$
$$\underline{l}_s = \quad (0 \quad\quad 0 \quad\quad 1)$$

$$2\,\underline{\underline{m}}_s = \begin{vmatrix} 0 & 0 & 0 \\ 0 & 0 & 1 \\ 0 & 1 & 0 \end{vmatrix}$$

$$s = 3 \quad \underline{n}_s = \quad (0 \quad\quad 0 \quad\quad 1)$$
$$\underline{l}_s = \quad (1 \quad\quad 0 \quad\quad 0)$$

$$2\,\underline{\underline{m}}_s = \begin{vmatrix} 0 & 0 & 1 \\ 0 & 0 & 0 \\ 1 & 0 & 0 \end{vmatrix}$$

$$s = 4 \quad \underline{n}_s = \quad (1/\sqrt{2} \quad 1/\sqrt{2} \quad 0)$$

$$\underline{l}_s = \quad (-1/\sqrt{2} \quad 1/\sqrt{2} \quad 0)$$

$$2\,\underline{\underline{m}}_s = \begin{vmatrix} -1 & 0 & 0 \\ 0 & 1 & 0 \\ 0 & 0 & 0 \end{vmatrix}$$

$$s = 5 \quad \underline{n}_s = \quad (0 \quad 1/\sqrt{2} \quad 1/\sqrt{2})$$

$$\underline{l}_s = \quad (0 \quad -1/\sqrt{2} \quad 1/\sqrt{2})$$

$$2\,\underline{\underline{m}}_s = \begin{vmatrix} 0 & 0 & 0 \\ 0 & -1 & 0 \\ 0 & 0 & 1 \end{vmatrix}$$

$$s = 6 \quad \underline{n}_s = \quad (1/\sqrt{2} \quad 0 \quad 1/\sqrt{2})$$

$$\underline{l}_s = \quad (1/\sqrt{2} \quad 0 \quad -1/\sqrt{2})$$

$$2\,\underline{\underline{m}}_s = \begin{vmatrix} 1 & 0 & 0 \\ 0 & 0 & 0 \\ 0 & 0 & -1 \end{vmatrix}$$

A la figure 1, on a représenté un cube ABCDEFGH dans le repère local microscopique $(x_1, x_2, x_3)$.

Le système de glissement s=1, correspond à un glissement selon le vecteur $\underline{l}_1$, parallèle à l'axe $x_2$, dans un plan tel que le plan CDEH qui est perpendiculaire au vecteur $\underline{n}_1$ et parallèle au plan $(x_2, x_3)$.

Les systèmes de glissement s=2 et s=3, sont comparables au système s=1, et correspondent à des glissements parallèles aux axes $x_3$ et $x_1$, le long de plans parallèles aux plans $(x_3, x_1)$ et $(x_1, x_2)$, respectivement.

Le système de glissement s=4 correspond à un glissement selon le vecteur $\underline{l}_4$ parallèle à la diagonale DF du carré ADEF situé dans le plan $(x_1, x_2)$, le glissement se faisant dans un plan tel que le plan DFGC perpendiculaire au vecteur $n_4$. Ce plan est parallèle à l'axe $x_3$ et forme un angle de 45° avec les plans $(x_1, x_3)$ et $(x_2, x_3)$.

Les systèmes de glissement s=5 et s=6 sont comparables au système s=4 et correspondent à des glissements parallèles aux diagonales FB et BD, le long des plans FBCE et BDEG, respectivement. Ces plans sont parallèles aux axes $x_1$ et $x_2$ respectivement, et forment des angles de 45° avec les plans $(x_2, x_1)$ et $(x_3, x_1)$ pour l'un, et avec les plans $(x_1, x_2)$ et $(x_3, x_2)$ pour l'autre.

Avec de tels systèmes de glissement, si $\dot{\gamma}_S$ représente la vitesse de glissement dans la direction $\underline{l}_s$ du système de glissement s, le tenseur des vitesses de déformation plastiques de la brique "grain" s'écrit :

$$\overset{\bullet}{\underset{=}{\varepsilon}}{}^P = \sum_s (\underline{\underline{m}}_s \overset{\bullet}{\gamma}_S) = \frac{1}{2} \begin{pmatrix} \overset{\bullet}{\gamma}_6 - \overset{\bullet}{\gamma}_4 & \overset{\bullet}{\gamma}_1 & \overset{\bullet}{\gamma}_3 \\ \overset{\bullet}{\gamma}_1 & \overset{\bullet}{\gamma}_4 - \overset{\bullet}{\gamma}_5 & \overset{\bullet}{\gamma}_2 \\ \overset{\bullet}{\gamma}_3 & \overset{\bullet}{\gamma}_2 & \overset{\bullet}{\gamma}_5 - \overset{\bullet}{\gamma}_6 \end{pmatrix}$$

Pour déterminer les vitesses de glissement $\gamma_S$ sur chacun des systèmes de glissement s, on utilise un modèle de comportement qui utilise les relations de viscoplasticité classiques décrites par exemple dans La Revue Européenne des éléments finis Vol 3 - n°4/1994, pages 515 à 541. Utilisation de modèles polycristallins pour le calcul par éléments finis. Georges Cailletaud - Philippe Pilvin et qui font intervenir de façon connue la scission résolue $\tau_s$ sur le système s. La scission résolue $\tau_s$ s'écrivant :

$$\tau_s = \underline{\underline{\sigma}}_g : \underline{\underline{m}}_s$$

Dans cette équation, $\underline{\sigma}_g$ est le tenseur des contraintes dans le grain considéré.

Pour modéliser le comportement d'un matériau déterminé, il faut alors choisir des briques "grain" du modèle polycristallin de telle sorte que ces briques représentent d'une part le comportement d'un grain du matériau, compte-tenu de sa nature cristallographique réelle et d'autre part d'un agrégat de tels grains, compte-tenu de la répartition réelle des orientations des grains dans le matériau, c'est-à-dire de la texture du matériau.

Pour faire ce choix, on associe à chaque système de glissement une scission critique telle que la brique "grain" obtenue ait un comportement identique à celui du cristal réel dont est constitué le matériau, puis on choisit le nombre de briques "grains", leurs orientations et leurs fractions volumiques de telle sorte que l'agrégat obtenu ait un comportement bien représentatif du matériau réel.

Pour représenter l'orientation des grains, on considère un repère local macroscopique $(X_1, X_2, X_3)$ et un repère local microscopique $(x_1, x_2, x_3)$ lié à chaque brique "grain". L'orientation d'une brique "grain" est définie comme étant l'orientation de son repère local microscopique $(x_1, x_2, x_3)$ par rapport au repère local macroscopique $(X_1, X_2, X_3)$.

De façon connue en elle-même, on considère que le repère local microscopique $(x_1, x_2, x_3)$ se déduit du repère local macroscopique $(X_1, X_2, X_3)$ par trois rotations :

-   une rotation d'angle $\psi$ du repère $(X_1, X_2, X_3)$ autour de l'axe $X_3$ qui conduit à un repère $(X'_1, X'_2, X_3)$,
-   une rotation d'angle $\phi$ autour de l'axe $X'_1$ qui conduit à un repère $(X'_1, X''_2, X'_3)$
-   une rotation d'angle $\varphi$ du repère $(X'_1, X''_2, X'_3)$ autour de l'axe $X'3$ qui conduit à un repère $(X''_1, X'''_2, X'_3)$ ; ce dernier repère est le repère local microscopique $(x_1, x_2, x_3)$.

Le repère local microscopique $(x_1, x_2, x_3)$ est donc défini par les trois angles de rotation $\Psi$, $\phi$, $\varphi$, qui ont permis de l'obtenir. Ces angles, sont habituellement appelés "angles d'Euler".

Cette méthodologie de choix des briques "grains" va être illustrée par deux exemples que l'homme du métier saura transposer à tout cas particulier.

Le premier exemple, concerne le cas d'un matériau isotrope constitué de cristaux de structure cubique centrée ou faces-centrées tels que les aciers.

Lorsque le matériau est constitué de cristaux de structure cubique, les systèmes de glissements peuvent être regroupés en deux sous-familles correspondant chacune à une scission critique. Ces deux familles de systèmes de glissement correspondent d'une part aux glissements sur les faces du cube, et d'autre part aux glissements sur les plans à 45° de ces faces.

Ces six systèmes de glissement adaptés à un cristal cubique sont représentés à la figure 2. Les systèmes s=1, s=2 et s=3, correspondent aux glissements sur les faces du cube et correspondent à la même scission critique, puisque, hormis l'orientation, ces faces sont identiques. Les systèmes s=4, s=5 et s=6, correspondent aux glissements sur les plans à 45° par rapport aux trois directions des arêtes du cube. Ces trois systèmes correspondent à la même scission critique, puisque, hormis l'orientation, ces plans sont identiques.

Afin de bien représenter le caractère isotrope du matériau, on considère un modèle constitué de sept briques grains dont les orientations sont choisies de façon à couvrir au mieux une sphère.

On utilise alors 7 briques "grain" choisies de telle sorte que la figure de pôles correspondante soit symétrique.

Pour cela, on construit un premier groupe de trois briques "grain" et un deuxième groupe de quatre briques "grain" en procédant comme suit :

- pour le premier groupe, on considère une première brique "grain" primitive d'indice g=1, obtenue par une rotation d'angle $\Psi=\pi/4$ autour de l'axe $X_3$. Pour obtenir un comportement identique selon les trois axes, on symétrise la figure de pôles en ajoutant deux briques "grain" d'indice g=2 et g=3 obtenues par rotation de $\pi/4$ autour des axes $X_1$ et $X_2$ respectivement. Les coordonnées des pôles de ces grains sont alors 0, $\pm$ 1, $\pm$ $1/\sqrt{2}$ et $\pm$ $(\sqrt{2}-1)$.

- pour le deuxième groupe, on considère une deuxième brique "grain" primitive dont les pôles sont situés sur trois grands cercles passant par un des axes Xi et formant un angle de 45° avec les deux autres axes, et dont les coordonnées sont $\pm$ 0,2, $\pm$ 0,4 et $\pm$ 0,5. Puis on symétrise la figure de pôles en ajoutant trois briques "grains" dont les pôles se déduisent des pôles de la deuxième brique "grain" primitive par symétrie par rapport aux axes $X_1$, $X_2$ et $X_3$.

On obtient ainsi sept briques "grains" auxquelles on attribue la fraction volumique f = 1/7 et dont les angles, $\Psi$, $\phi$, et $\varphi$, exprimés en radians, sont :

| grains: | 1 | 2 | 3 | 4 | 5 | 6 | 7 |
|---|---|---|---|---|---|---|---|
| $\Psi$ | $\pi/4$ | 0 | $\pi/2$ | 0,464 | $\pi/4$ | 2,034 | -2,678 |
| $\phi$ | 0 | $\pi/4$ | $\pi/4$ | 0,841 | 1,231 | 0,841 | 0,841 |
| $\varphi$ | 0 | 0 | $-\pi/2$ | 0,464 | $-\pi/4$ | -1,107 | 2,034 |

Les sens de deux des trois axes x1, x2 et x3 peuvent être inversés, et les trois axes peuvent être soumis à une permutation circulaire sans modifier les résultats du modèle. Les angles du tableau correspondent à un choix particulier des sens des axes et de la permutation.

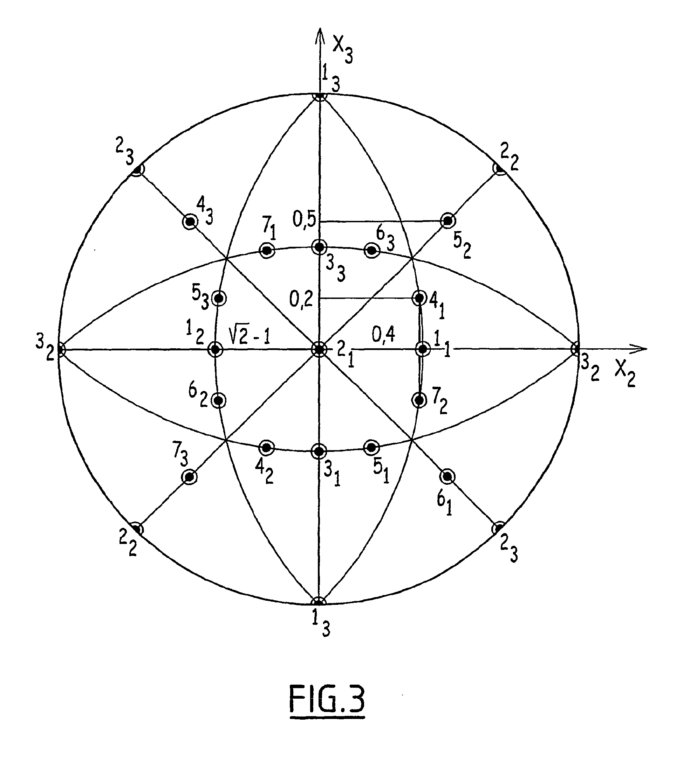

La figure de pôles obtenue est représentée à la figure 3. Sur cette figure, les pôles repérés $1_1$, $1_2$, $1_3$ représentent les pôles de la première brique "grain". Les pôles repérés $2_1$, $2_2$, $2_3$ représentent les pôles de la deuxième brique "grain", et ainsi de suite. On voit en particulier que les pôles $4_3$, $5_2$, $6_1$ et $7_3$ ont pour coordonnées ($\pm$ 0, 5 ; $\pm$ 0,5). Les pôles $4_1$, $4_2$, $5_1$, $5_3$, $6_2$, $6_3$, $7_1$ et $7_2$ ont pour coordonnées ($\pm$ 0,2 ou $\pm$ 0,4).

Ce modèle est universel pour les matériaux isotropes à structure cubique centrée ou faces-centrées.

A titre de deuxième exemple, on considère un matériau anisotrope ayant une structure hexagonale compacte. Un tel matériau est par exemple du Zircaloy recristallisé. Pour une telle structure cristallographique hexagonale, on considère trois groupes de systèmes de glissement correspondant à trois scissions critiques distinctes. Le premier groupe rassemble les systèmes 2 et 3 qui correspondent au glissement basal, le deuxième groupe rassemble les systèmes 1 et 4 qui correspondent au glissement prismatique, et le troisième groupe rassemble le système 5 et 6 qui correspondent aux glissements pyramidaux.

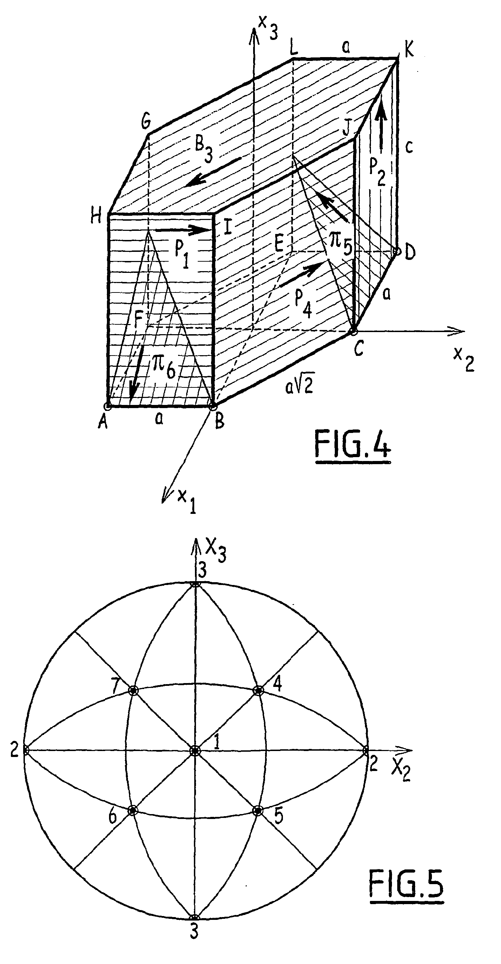

Les systèmes de glissement destinés à représenter un cristal hexagonal compact sont représentés à la figure 4. Sur cette figure, les axes $x_1$, $x_2$, $x_3$ constituent le repère orthogonal de référence de la brique "grain", c'est-à-dire le repère local microscopique. Le prisme à base hexagonale A B C D E F G H I J K L est une structure qui dans le cadre du modèle a un comportement identique à celui d'un cristal hexagonal, mais n'a pas la même géométrie que celle d'un cristal de structure hexagonale. Les systèmes de glissement :

- s=2 repéré $P_2$ sur la figure, et s=3, repéré $B_3$ correspondent au glissement basal ; il leur est attribué une première valeur de scission critique ;
- s=1 repéré $P_1$ et s=4 repéré $P_4$, correspondent au glissement prismatique ; il leur est attribué une deuxième valeur de scission critique ou deux valeurs distinctes.
- s=5 repéré $\pi_5$ et s=6 repéré $\pi_6$, correspondent aux glissements pyramidaux ; il leur est attribué une valeur de la scission critique particulière.

En outre, il est nécessaire de choisir un certain nombre de briques "grains" ayant des orientations permettant de représenter l'anisotropie globale du matériau. Dans le deuxième exemple, qui concerne en particulier un tube en Zircaloy recristallisé, l'invention utilise six briques "grains" ayant chacune une fraction volumique de 1/6, dont les orientations par rapport au repère local macroscopique ($X_1$, $X_2$, $X_3$) lié au point de l'objet considéré, sont les suivantes :

| g = | 1 | 2 | 3 | 4 | 5 | 6 |
|---|---|---|---|---|---|---|
| $\Psi$ = | 0 | $\pi/2$ | $\Psi_1$ | $\pi-\Psi_1$ | $\Psi_2$ | $\pi-\Psi_2$ |

(suite)

| g = | 1 | 2 | 3 | 4 | 5 | 6 |
|-----|-----|-----|-----|-----|-----|-----|
| $\phi$ = | $\pi/2$ | $\pi/2$ | $\pi/2$ | $\pi/2$ | $\pi/2$ | $\pi/2$ |
| $\varphi$ = | $\varphi_1$ | $\varphi_2$ | $\varphi_3$ | $\varphi_3$ | 0 | 0 |

Les orientations de ces six grains dépendent de cinq paramètres qui correspondent à cinq angles d'Euler $\Psi_1$, $\Psi_2$, $\varphi_1$, $\varphi_2$ et $\varphi_3$. Ces cinq paramètres peuvent être déterminés par une méthode d'identification numérique en comparant les résultats de calcul numérique à des résultats d'essais de traction-torsion. Ces méthodes d'identification numérique sont des méthodes connues de l'homme du métier.

Pour modéliser l'évolution de la texture d'un matériau polycristallin, c'est-à-dire l'évolution des orientations des grains, on considère de façon connue la rotation $\underline{Q}$ du réseau cristallin d'un grain par rapport à un repère dit "corotationnel". La vitesse de rotation du réseau cristallin est donnée par :

$$\underline{\dot{\underline{Q}}} : \underline{\underline{Q}}^T = -\sum_{s=1}^{N} \underline{\underline{q}}_s \, \dot{\gamma}_s$$

où apparaît le tenseur de rotation :

$$\underline{\underline{q}}_s = \ (\underline{l}_s \otimes \underline{n}_s - \underline{n}_s \otimes \underline{l}_s)/2$$

Le repère corotationnel suit la rotation moyenne de la matière R. De façon connue, sa vitesse de rotation par rapport au repère du laboratoire (L1, L2, L3) est calculée à partir des gradients des vitesses $\underline{v}$ des points matériels du corps solide déformable :

$$\underline{\dot{\underline{R}}} : \underline{\underline{R}}^T = (\underline{\underline{grad}}\,\underline{v} - \underline{\underline{grad}}^T\,\underline{v})/2$$

Dans l'exemple du matériau initialement isotrope constitué de 7 briques "grain", il peut être intéressant, pour certaines géométries de pièces et certains chargements particuliers comme le laminage d'une tôle, de maintenir une symétrie orthotrope après évolution de la texture. Pour cela et de façon nouvelle, on dissocie les grains 1 à 3, obtenus par rotation de $\pi/4$ autour des trois axes X3, X1 et X2 du repère local macroscopique, en six grains obtenus par des rotations de $\pi/8$ (grains 1 à 3) et $3\pi/8$ (grains 8 à 10) autour de ces axes. De plus, les axes x2 et x3 du repère à l'échelle microscopique du grain 8 sont inversés, les axes x1 et x3 du grain 9 sont inversés et les axes x1 et x2 du grain 10 sont inversés, ce qui est équivalent à des rotations d'angle $\pi$ autour des axes x1, x2 et x3 respectivement pour les grains 8, 9 et 10. On obtient ainsi dix briques "grains", dont les angles d'Euler $\psi$, $\phi$ et $\varphi$ et les fractions volumiques f sont :

| grains | 1 | 2 | 3 | 4 | 5 | 6 | 7 | 8 | 9 | 10 |
|--------|-----|-----|-----|-------|-------|--------|--------|-------|-------|-------|
| $\psi$ | $\pi/8$ | 0 | $\pi/2$ | 0,464 | $\pi/4$ | 2,034 | -2,678 | $3\pi/8$ | 0 | $\pi/2$ |
| $\phi$ | 0 | $\pi/8$ | $\pi/8$ | 0,841 | 1,231 | 0,841 | 0,841 | $\pi$ | $11\pi/8$ | $3\pi/8$ |
| $\varphi$ | 0 | 0 | $-\pi/2$ | 0,464 | $-\pi/4$ | -1,107 | 2,034 | 0 | $\pi$ | $\pi/2$ |
| f | 1/14 | 1/14 | 1/14 | 1/7 | 1/7 | 1/7 | 1/7 | 1/14 | 1/14 | 1/14 |

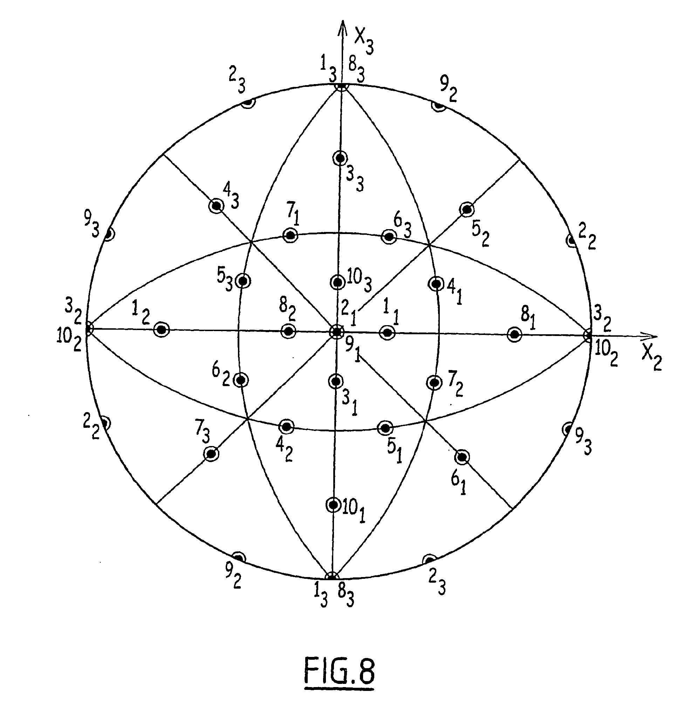

La figure de pôles obtenue dans l'état initial, avant évolution de texture, est représentée à la figure 8. Pour obtenir une figure de pôles orthotrope après évolution de texture, les dix briques "grains" 1 à 10 peuvent être complétées par dix briques "grains" obtenues en substituant les unes aux autres les normales aux plans de glissement $\underline{n}_s$ et les directions de glissement $\underline{l}_s$ des 6 systèmes de glissement, ce qui revient à conserver les tenseurs d'orientation $\underline{m}_s$, et à inverser les tenseurs de rotation $\underline{q}_s$.

On va maintenant décrire les briques "joint de grains", destinées à modéliser les endommagements intergranulaires liés à l'ouverture des joints de grains.

Pour modéliser les endommagements intergranulaires, on utilise des briques "joint de grains" dont le comportement est représenté par au moins un système d'ouverture et éventuellement au moins un système de glissement.

Un système d'ouverture se distingue d'un système de glissement par le fait qu'il conduit à un tenseur de déformations plastiques dont la trace est positive.

Comme pour les briques "grains", les systèmes d'ouverture ou de glissement sont définis par des matrices d'orientation $\underline{m}$ se déduisant des normales aux plans de déformation (glissement ou ouverture) $\underline{n}_s$ et des directions de déformation $\underline{l}_s$.

A titre d'exemple, on considère les deux cas suivants

1) la brique "joint de grain" comporte un système d'ouverture (s=1) et deux systèmes de glissement intergranulaire (s=2 et s=3). Ces systèmes sont définis de la façon suivante :

$$s = \qquad\qquad 1 \qquad\qquad\qquad 2 \qquad\qquad\qquad 3$$

$$\underline{n}_s = \qquad (1\quad 0\quad 0) \qquad (1\quad 0\quad 0) \qquad (1\quad 0\quad 0)$$

$$\underline{l}_s = \qquad (1\quad 0\quad 0) \qquad (0\quad 1\quad 0) \qquad (0\quad 0\quad 1)$$

$$2\ \underline{\underline{m}}_s = \begin{pmatrix} 2 & 0 & 0 \\ 0 & 0 & 0 \\ 0 & 0 & 0 \end{pmatrix} \begin{pmatrix} 0 & 1 & 0 \\ 1 & 0 & 0 \\ 0 & 0 & 0 \end{pmatrix} \begin{pmatrix} 0 & 0 & 1 \\ 0 & 0 & 0 \\ 1 & 0 & 0 \end{pmatrix}$$

2) La brique "joint de grain" comprend trois systèmes d'ouverture (s=1, s=2, s=3) et trois systèmes de glissement intergranulaire (s=4, s=5, s=6) :

$$s = \qquad\qquad 1 \qquad\qquad 2 \qquad\qquad 3$$

$$\underline{n}_s = \qquad (1\ 0\ 0) \qquad (0\ 1\ 0) \qquad (0\ 0\ 1)$$

$$\underline{l}_s = \qquad (1\ 0\ 0) \qquad (0\ 1\ 0) \qquad (0\ 0\ 1)$$

$$2\ \underline{\underline{m}}_s = \begin{pmatrix} 2 & 0 & 0 \\ 0 & 0 & 0 \\ 0 & 0 & 0 \end{pmatrix} \begin{pmatrix} 0 & 0 & 0 \\ 0 & 2 & 0 \\ 0 & 0 & 0 \end{pmatrix} \begin{pmatrix} 0 & 0 & 0 \\ 0 & 0 & 0 \\ 0 & 0 & 2 \end{pmatrix}$$

$$s = \qquad\qquad 4 \qquad\qquad\qquad 5 \qquad\qquad\qquad 6$$

$$\underline{n}_s = \quad (1 \quad 0 \quad 0) \qquad (0 \quad 1 \quad 0) \qquad (0 \quad 0 \quad 1)$$

$$\underline{1}_s = \quad (0 \quad 1/\sqrt{2} \quad 1/\sqrt{2}) \quad (1/\sqrt{2} \quad 0 \quad 1/\sqrt{2}) \quad (1/\sqrt{2} \quad 1/\sqrt{2} \quad 0)$$

$$\sqrt{2}\ \underline{\underline{m}}_s = \begin{pmatrix} 0 & 1/\sqrt{2} & 1/\sqrt{2} \\ 1/\sqrt{2} & 0 & 0 \\ 1/\sqrt{2} & 0 & 0 \end{pmatrix} \begin{pmatrix} 0 & 1/\sqrt{2} & 0 \\ 1/\sqrt{2} & 0 & 1/\sqrt{2} \\ 0 & 1/\sqrt{2} & 0 \end{pmatrix} \begin{pmatrix} 0 & 0 & 1/\sqrt{2} \\ 0 & 0 & 1/\sqrt{2} \\ 1/\sqrt{2} & 1/\sqrt{2} & 0 \end{pmatrix}$$

Le choix des briques "joint de grain" dépend de la nature des sollicitations auxquelles est soumis l'objet dont on veut étudier le comportement.

Lorsque l'objet dont on veut étudier le comportement est soumis à des sollicitations dans une seule direction, X1, on peut considérer une seule brique "joint de grain" perpendiculaire à la direction X1, dont le système d'ouverture correspond à la direction X1 et les deux autres systèmes de glissement correspondent à X2 et X3.

Pour un chargement dans une direction quelconque, on peut soit utiliser trois briques "joint de grain" perpendiculaires à chacune des directions X1, X2, X3, soit utiliser une seule brique "joint de grain" comportant trois systèmes d'ouverture et trois systèmes de glissement.

Enfin pour la description fine de l'endommagement par une sollicitation multiaxiale, on peut considérer sept briques "joint de grain" ayant chacune un système d'ouverture et deux systèmes de glissement, et une orientation définie par les deux angles d'Euler de la normale n du système d'ouverture.

Les orientations des directions d'ouverture des briques "joint de grain" peuvent être représentées par une figure de pôles reproduite à la figure 5, dans laquelle les sept orientations sont repérées 1, 2, 3, 4, 5, 6 et 7.

Les fractions volumiques des briques "joint de grain" sont choisies de telle sorte que leur fraction volumique totale soit égale à six fois le rapport de l'épaisseur mécanique du joint de grain à son diamètre. A titre indicatif, cela représente quelques pour-cent.

Pour décrire le comportement des joints de grains, on utilise des modèles visco-plastiques classiques qui permettent de déterminer les vitesses d'ouverture des joints de grain. Ces modèles sont par exemple les modèles décrits par Onck et Van der Giessen dans Journal of the Mechanics and Physics of Solids-Vol 47, 1999, pages 99-139-"Growth of an initially sharp crack by grain boundary cavitation".

On va maintenant décrire une brique "trou", destinée à modéliser l'endommagement ductile. Une telle brique "trou" est caractérisée par une vitesse de déformation plastique purement volumique représentée par les équations :

$$\dot{\varepsilon}_m^p = 1/3 D_1 \exp\left[\frac{\Sigma_m}{\rho\sigma_1}\right] \ \dot{E}_{eq}^p$$

$$\rho = \exp(-3E_m^p)$$

$$\dot{E}_m^p = f\ \dot{\varepsilon}_m^p$$

$$f = 1 - (1 - f_0) \exp (-3E_m^p)$$

dans lesquelles :

D$_1$ et $\sigma_1$ sont des coefficients scalaires caractéristiques du matériau,

$\dot{\varepsilon}_m^p$ est la vitesse de déformation plastique volumique microscopique.

$\Sigma_m$ est la contrainte macroscopique moyenne, égale au 1/3 de la trace du tenseur des contraintes.

$\dot{E}_{eq}^P$ est la vitesse de déformation plastique macroscopique équivalente, au sens de von Mises.

$\dot{E}_m^p$ est la vitesse de déformation plastique macroscopique moyenne.

$f_0$ est la fraction volumique initiale de la brique "trou"
f est la fraction volumique de la brique "trou" à l'instant t.
$\rho$ est la masse volumique relative.

Cette brique "trou" a une fraction volumique f qui est une variable. Quand on ajoute une brique "trou" à un modèle constitué de briques "grain" de fraction volumique fg chacune, on considère que la fraction volumique de chaque brique "grain" devient (1-f) fg.

Les différentes briques "grain", "joint de grain" et "trou" qui viennent d'être décrites, permettent de modéliser le comportement microscopique du matériau. Mais, comme on l'a vu précédemment pour modéliser le comportement d'un objet, il est nécessaire de pouvoir passer du niveau microscopique au niveau macroscopique et réciproquement. Pour cela, on utilise des modèles appelés "modèles de changement d'échelle" dont le principe général est connu de l'homme du métier, mais qui, dans le cadre de la présente invention, comportent des particularités qu'on va décrire maintenant.

On considère trois situations selon que le modèle ne comporte que des briques "grain", que le modèle comporte des briques "grain" et des briques "joints de grain" ou que le modèle comporte des briques "grains" et une brique "trou".

Lorsque le modèle ne comporte que des briques "grains", les relations permettant le passage de l'échelle macroscopique à l'échelle microscopique et inversement sont respectivement :

a) pour le passage de l'échelle macroscopique à l'échelle microscopique :

$$\underline{\underline{\sigma}}_g = \underline{\underline{\Sigma}} + 2 \mu (1-\beta) \alpha (\underline{\underline{E}}^P - \underline{\underline{\varepsilon}}_g^P)$$

avec :

$$\frac{1}{\alpha} = 1 + D (\underline{\underline{E}}^p)_{eq}^{max}$$

et

$$\beta = \frac{2}{15} \frac{4 - 5\nu}{1 - \nu}$$

Dans ces équations,

$\underline{\sigma}_g$ est le tenseur des contraintes microscopiques dans la brique "grain" d'indice g.

$\underline{\Sigma}$ est le tenseur des contraintes macroscopiques.

$\underline{E}^P$ est le tenseur des déformations plastiques macroscopiques.

$\underline{\underline{\varepsilon}}^{P}_{g}$ est le tenseur des déformations microscopiques dans la brique "grain" d'indice g.

$\mu$ est le module de cisaillement du matériau.

$\nu$ est le coefficient de Poisson du matériau.

D est un paramètre propre au matériau, ajustable à partir d'essais.

$\left(\underline{\underline{E}}^{P}\right)^{max}_{eq}$ est la valeur maximale du deuxième invariant de von Mises du tenseur des déformations plastiques macroscopiques, atteinte antérieurement.

b) Pour le passage de l'échelle microscopique à l'échelle macroscopique :

$$\underline{\underline{\Sigma}} = \sum_{g=1}^{N} (f_g \underline{\underline{\sigma}}_g)$$

$$\underline{\underline{E}}_p = \sum_{g=1}^{N} (f_g \underline{\underline{\varepsilon}}^{P}_g)$$

$$\dot{\underline{\underline{E}}}_p = \sum_{g=1}^{N} (f_g \dot{\underline{\underline{\varepsilon}}}^{P}_g)$$

$$\underline{\underline{E}}^e = \frac{1}{2\mu}\left\{\underline{\underline{1}} - \left\{\frac{\nu}{1+\nu}\underline{1} \otimes \underline{1}\right\}\right\} : \underline{\underline{\Sigma}}$$

dans ces équations,

$f_g$ est la fraction volumique de la brique "grain" d'indice g,

$\underline{E}^e$ est le tenseur des déformations élastiques macroscopiques.

Lorsque le modèle comporte des briques "grains" et des briques "joint de grain", les relations de passage du niveau macroscopique au niveau microscopique et du passage du niveau microscopique au niveau macroscopique sont modifiées de la façon suivante :

$$\underline{\underline{\sigma}}_g = \underline{\underline{\Sigma}} + 2\mu(1-\beta)\left[\eta(\underline{1}\otimes\underline{1}) + \alpha\underline{\underline{1}}\right](\underline{\underline{E}}^{P} - \underline{\underline{\varepsilon}}^{P}_g)$$

avec

$$\frac{1}{\alpha} = 1 + D\ (\underline{\underline{E}}^{p})^{max}_{eq}$$

et

$$\frac{1}{\eta}=2+5\mathrm{D}\ \left(\underline{\underline{E}}^{p}\right)^{max}_{eq}$$

Enfin, lorsque le modèle comporte des briques "grains" et une brique "trou", les relations de passage du niveau macroscopique au niveau microscopique et inversement sont les suivantes :

a) pour le passage de l'échelle macroscopique à l'échelle microscopique :

$$\underline{\underline{\sigma}}_{g} = \frac{1}{1-f}\underline{\underline{\Sigma}} + D_{1}f\,\sigma_{1}\exp\left[\frac{\Sigma_{m}}{\rho\sigma_{1}}\right]\frac{\underline{\underline{\Sigma}}}{\Sigma_{eq}}+2\mu(1-\beta)\alpha\left(\sum_{h=1}^{N}\left(f_{h}\,\underline{\underline{\varepsilon}}^{p}_{h}\right)-\underline{\underline{\varepsilon}}^{p}_{g}\right)$$

et

$$\underline{\underline{\sigma}}_{0} = -(1-f)\,D_{1}\,\sigma_{1}\exp\left[\frac{\Sigma_{m}}{\rho\sigma_{1}}\right]\frac{\underline{\underline{\Sigma}}}{\Sigma_{eq}}$$

$\underline{\underline{\sigma}}_{o}$ est le tenseur des contraintes microscopiques dans la brique "trou".
$D_{1}$ et $\sigma_{1}$ sont des paramètres propres au matériau.
b) et pour le passage de l'échelle microscopique à l'échelle macroscopique :

$$\underline{\underline{\Sigma}} = f\,\underline{\underline{\sigma}}_{0} + (1-f)\sum_{g=1}^{n} (f_{g}\underline{\underline{\sigma}}_{g})$$

$$\underline{\underline{\dot{E}}}^{p}=f\dot{\varepsilon}^{p}_{m}\underline{\underline{1}} + (1-f)\sum_{g=1}^{N} (f_{g}\underline{\underline{\dot{E}}}^{p}_{g})$$

$$\underline{\underline{\dot{\varepsilon}}}^{p}_{g} = \sum_{s} (\underline{\underline{m}}^{g}_{s})\,\dot{\gamma}^{g}_{s}$$

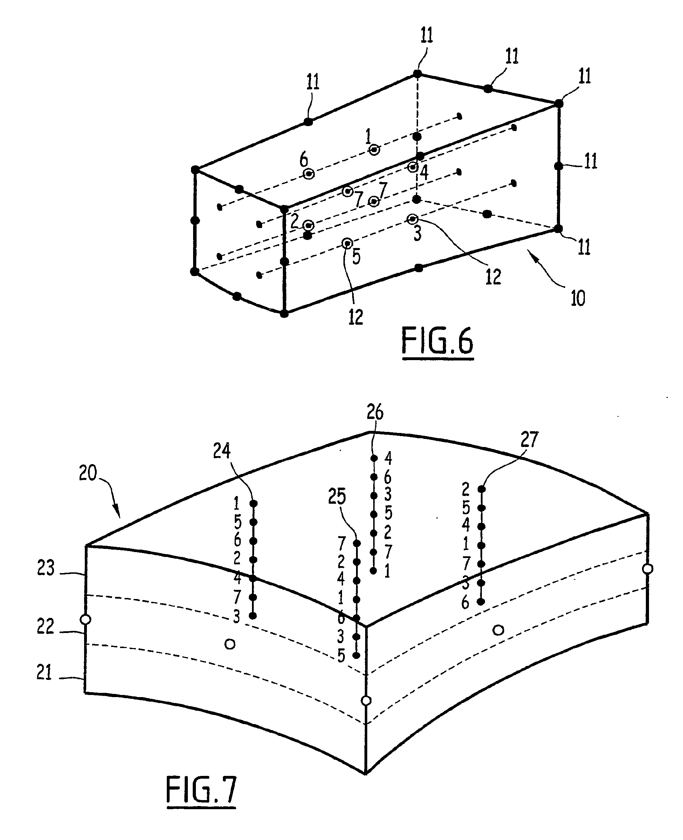

Les briques telles qu'elles ont été définies plus haut, associées aux modèles de localisation qui viennent d'être décrits, constituent le modèle polycristallin. Ce modèle permet de calculer l'effet de sollicitations mécaniques sur un objet, mais pour cela il doit être intégré à un modèle de calcul par éléments finis.
On va maintenant décrire l'intégration du modèle polycristallin de comportement du matériau dans un modèle de calcul par éléments finis.
On va tout d'abord décrire le cas d'un calcul sans endommagement, c'est-à-dire dans lequel le modèle de comportement ne comporte que des briques "grains". Dans un tel modèle, le nombre de briques "grains" étant faible, on affecte une seule brique "grain" à chaque point de discrétisation du calcul de structure par éléments finis. Les briques "grains" sont affectées aux points de Gauss, qui sont les points d'intégration dans le calcul par éléments finis. En chacun de ces points, le nombre de briques "grains" étant égal à un, seules les relations scalaires du comportement des briques "grains" sont utilisées. De plus, les vitesses de déformation plastique macroscopiques sont confondues avec celles des briques "grain". Il en est de même de la contrainte macroscopique qui est égale à la contrainte dans la brique "grain" et de la déformation macroscopique qui est égale à la déformation dans la brique "grain". Il en résulte que les relations de localisation et d'homogénéisation du modèle de changement d'échelle deviennent inutiles.
Afin de bien représenter la structure du matériau et en particulier son homogénéité dans l'espace, les briques "grain" sont affectées aux points d'intégration du maillage de la structure au moyen d'un algorithme garantissant une permutation au sein d'un même élément fini et entre les éléments finis voisins. Ainsi, les briques "grain" sont réparties de façon analogue aux grains du matériau réel. Un exemple de répartition est donné à la figure 6 correspondant au cas d'un matériau à structure cubique tel que décrit précédemment. Cette figure représente un élément fini repéré généralement par 10 comportant six faces en forme de quadrilatère. Les sommets et les milieux des arêtes correspondent à des noeuds du modèle repérés 11, ce qui fait vingt noeuds. Les points d'intégration ou points de Gauss, repérés 12, sont situés à l'intérieur de l'élément fini. Les briques "grain" correspondant aux sept orientations sont réparties comme l'indiquent les chiffres 1 à 7 associés aux points de Gauss. Dans le cas où l'objet étudié est une plaque ou une coque on représente cet objet par plusieurs couches d'épaisseur identique avec trois points d'intégration en milieu et en limite de chaque couche, ce qui conduit à un nombre de points d'intégration égal à 2 p + 1. Comme on utilise de trois à cinq couches le nombre de points d'intégration est de sept, neuf ou onze. Ainsi, la plaque ou la coque comporte toutes les briques "grain" du modèle dans son épaisseur, comme un matériau réel. Une permutation garantit une bonne représentation du matériau réel dans les directions tangentes à la plaque ou à la coque. Une permutation garantit également une bonne représentation moyenne du matériau réel dans l'épaisseur de la plaque ou de la coque. La répartition des briques "grain" est représentée à la figure 7. L'élément fini 20, comporte trois couches 21, 22 et 23. Les points d'intégration sont regroupés en quatre ensembles 24, 25, 26 et 27 comportant chacun sept briques "grain" dont les orientations sont repérées de 1 à 7. Dans certains cas il peut être intéressant d'affecter plusieurs briques "grain" à un des points d'intégration voire toutes les briques "grain" du modèle à chaque point d'intégration. Dans ce cas, les calculs sont un peu plus longs.

En particulier, dans le calcul par éléments finis avec évolution de texture utilisant les dix briques "grain" précédemment définies pour un matériau initialement isotrope, on affecte à certains points d'intégration deux briques "grains" correspondant aux grains dissociés 1 et 8, 2 et 9, 3 et 10. Si l'on utilise les dix briques "grains" supplémentaires obtenues en substituant les normales aux plans de glissement $\underline{n}_s$ et les directions de glissement $\underline{1}_s$, on affecte ces briques aux mêmes points d'intégration que les briques 1 à 10. Le nombre de comportements distincts des points d'intégration reste ainsi limité à sept, comme dans le cas d'un calcul sans évolution de texture pour un matériau isotrope.

Lorsqu'on considère le cas dans lequel les joints peuvent être endommagés, c'est-à-dire lorsqu'on utilise un modèle comportant des briques "joint de grain", les fractions volumiques des briques "joint de grain" étant très faibles, pour obtenir une bonne représentation du matériau on associe une brique "grain" et une brique "joint de grain" à chaque point d'intégration du modèle de calcul par éléments finis, et on utilise un algorithme de permutation de telle sorte que les couples brique "grain"/brique "joint de grain" ne soient pas toujours les mêmes. Dans ce cas, les relations de changement d'échelle restent nécessaires mais sont très simplifiées.

Ces relations sont :

$$\underline{\underline{\Sigma}} \;=\; f_g \underline{\underline{\sigma}}_g \;+\; f_j \underline{\underline{\sigma}}_j$$

$$\underline{\underline{E}}^p \;=\; f_g \underline{\underline{\varepsilon}}_g^p \;+\; f_j \underline{\underline{\varepsilon}}_j^p$$

$$f_g \;+\; f_j \;=\; 1$$

$$\underline{\underline{\sigma}}_g \;=\; \underline{\underline{\Sigma}} \;+\; 2\mu \,(1-\beta)\,[\,\eta\,(\underline{1} \otimes \underline{1}) \;+\; \alpha \; \underline{\underline{1}}\,]\, f_j (\underline{\underline{\varepsilon}}_j^p - \underline{\underline{\varepsilon}}_g^p)$$

$$\underline{\underline{\sigma}}_j \;=\; \underline{\underline{\Sigma}} \;+\; 2\mu \,(1-\beta)\,[\,\eta\,(\underline{1} \otimes \underline{1}) \;+\; \alpha \; \underline{\underline{1}}\,]\, f_g (\underline{\underline{\varepsilon}}_g^p - \underline{\underline{\varepsilon}}_j^p)$$

Dans le cas où l'on veut modéliser l'endommagement ductile, c'est-à-dire lorsqu'on utilise un modèle comportant des briques "grain" et une brique "trou", on associe une brique "grain" et une brique "trou" à chacun des points d'intégration. Dans ce cas également, les relations de localisation sont très simplifiées et ces relations sont :

$$\dot{\underline{E}}_{dev}^{P} \;=\; (1-f)\,\dot{\underline{\varepsilon}}_{g}^{P}$$

$$\dot{\underline{E}}_{m}^{P} \;=\; f\,\dot{\underline{\varepsilon}}_{0m}^{P}$$

$$\underline{\underline{\sigma}}_{g} \;=\; \frac{1}{1-f}\;\underline{\underline{\Sigma}}\; +\; D_1\rho\sigma_1\;\exp\!\left(\frac{\Sigma_m}{\rho\sigma_1}\right)\;\frac{\underline{\underline{\Sigma}}}{\Sigma_{eq}}$$

Avec ce modèle, il est alors possible de calculer l'évolution entre un instant 0 et un instant t, des propriétés du matériau dont est constitué l'objet pour lequel on fait l'étude des contraintes et des déformations à l'état macroscopique. Cependant, pour faire un tel calcul, il est nécessaire de pouvoir déterminer les différents paramètres qui interviennent dans le modèle.

Pour déterminer ces paramètres, une méthode d'identification connue en elle-même, selon laquelle on commence d'abord par rassembler dans une base de donnée relative au matériau des résultats d'essais de traction, d'essais traction/torsion ou encore d'autres essais mécaniques tels que des essais de fluage. Puis on simule par le calcul les différents essais de la base de donnée en utilisant des valeurs a priori des paramètres. Puis on compare les résultats de ces simulations aux essais proprement dits et, en fonction de l'écart entre les résultats expérimentaux et les résultats calculés, on déduit de nouvelles valeurs pour les paramètres. Enfin, on reproduit ce processus jusqu'à ce que les écarts entre les résultats expérimentaux et les résultats simulés soient inférieurs à une valeur définie à l'avance.

A titre d'exemple, on a appliqué le modèle selon l'invention au cas d'un tube en Zircaloy recristallisé soumis à un effort de traction biaxée. Dans le repère du Laboratoire ($L_1$, $L_2$, $L_3$), on a utilisé des coordonnées cylindriques.

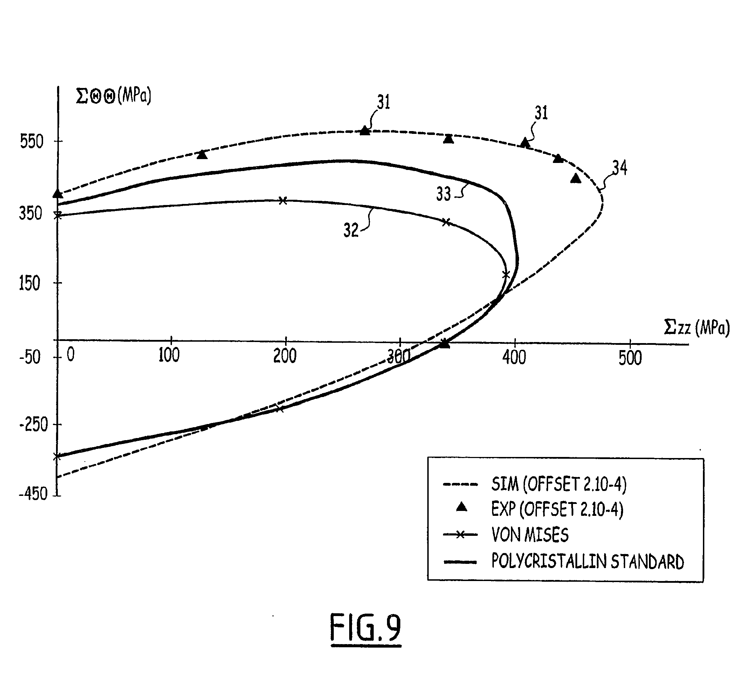

Le modèle a été identifié sur la base de deux essais de traction dans les orientations axiales zz et tangentielle $\theta\theta$ du tube et d'un essai de torsion $z\theta$ du tube. Le résultat de l'identification est représenté à la figure 9. Dans cette figure, les triangles repérés 31 correspondent à des points expérimentaux, la courbe 32 représente les résultats tels qu'ils sont obtenus en appliquant les critères de von Mises avec un modèle macroscopique classique de comportement du matériau, la courbe 33 représente les résultats obtenus par un modèle polycristallin selon l'art antérieur, et la courbe 34 représente les résultats obtenus avec le modèle selon l'invention. Ces courbes montrent que le procédé selon l'invention conduit à une très bonne concordance des résultats expérimentaux et des résultats calculés pour des tractions dans toutes les directions du plan zz-$\theta\theta$, ce qui n'est pas le cas de l'application simple des critères de von Mises, ni le cas de l'utilisation d'un modèle polycristallin selon l'art antérieur. L'identification a demandé 2 heures de calcul sur une station de calcul standard. L'identification du modèle polycristallin selon l'art antérieur est décrite dans "Philippe Geyer, Comportement élasto-viscoplastique de tubes en Zircaloy-4 : approche expérimentale et modélisation micromécanique, thèse de l'Ecole des Mines de Paris, 9 décembre 1999". Cette identification a nécessité plusieurs jours de calcul sur un ensemble de 5 à 10 stations de calcul travaillant simultanément. Le résultat est moins bon qu'avec le modèle selon l'invention non pas parce que le modèle polycristallin selon l'art antérieur est moins bon que le modèle selon l'invention, mais parce qu'il conduit à des calculs très longs qui n'ont pas permis d'optimiser l'identification des paramètres. Cet exemple montre l'intérêt du procédé selon l'invention qui réduit de façon considérable les temps de calcul et ainsi permet de déterminer l'effet de sollicitations mécaniques sur des objets dans des conditions dans lesquelles les méthodes selon l'art antérieur ne sont pas applicables.

Le procédé qui vient d'être décrit permet de calculer l'évolution des propriétés du matériau ainsi que ses endommagements. Il fait appel à des modèles visco-plastiques, mais l'homme du métier pourra utiliser tout modèle de comportement anélastique compatible avec un modèle polycristallin conforme à l'invention et notamment, les comportements en fluage et en fatigue fluage.

Les endommagements correspondent soit à l'ouverture des briques "joint de grain" soit au grossissement des briques "trou" selon qu'on s'intéresse à un endommagement intergranulaire ou à un endommagement ductile. Dans les deux cas, l'homme de métier peut définir un critère de rupture défini, par exemple, par un seuil d'endommagement tel, qu'au delà, il y a rupture. On peut ainsi prévoir les conditions de rupture en service. Dans le cas de l'endommagement intergranulaire, dans le cadre d'une méthode par éléments finis, on peut définir un critère d'ouverture d'une brique "joint de grain" tel que, lorsque ce critère est satisfait, il y a fissure et, au point correspondant, la résistance mécanique est nulle. Dans le cas de l'endommagement ductile, dans le cadre d'une méthode par éléments finis, on peut définir une fraction volumique critique d'une brique "trou" telle que, lorsque ce critère est satisfait, il y a fissure et, au point correspondant, la résistance mécanique est nulle. Dans les calculs, on considère le point auquel ce critère est atteint en premier. Puis en prenant en compte les points voisins sur lesquels les contraintes vont se reporter, on peut suivre la croissance de la fissure et ainsi déterminer les conditions d'apparition d'une rupture.

Le procédé selon l'invention peut être utilisé pour déterminer l'incidence du procédé de fabrication d'un objet comportant une opération de mise en forme par déformation plastique à froid, tels que l'emboutissage, et en particulier pour déterminer les propriétés mécaniques de l'objet en chacun de ses points. En effet, l'incidence d'une opération de mise en forme par déformation plastique sur les propriétés mécaniques dépend de la déformation effectivement réalisée et cette déformation dépend en général du point considéré. Les propriétés mécaniques après mise en forme ne sont donc pas, en général, identiques en tous points de l'objet. On peut alors utiliser l'évaluation de la répartition des propriétés mécaniques de l'objet obtenue par le procédé selon l'invention, pour déterminer le comportement en service de cet objet. L'avantage du procédé selon l'invention est que cette évaluation de la répartition des propriétés mécaniques d'un objet peut être faite dans des conditions très diverses à partir d'un nombre restreint d'essais mécaniques. En effet, pour évaluer les propriétés mécaniques d'objets constitués du même matériau, mais réalisés par mise en forme selon des modalités diverses, il suffit de réaliser les essais mécaniques nécessaires à la construction du modèle polycristallin selon l'invention, représentatif du matériau, puis appliquer le procédé selon l'invention à chacun des cas particuliers envisagés.

A titre d'exemple, on peut utiliser le procédé selon l'invention pour évaluer le comportement au choc d'une pièce de véhicules automobiles obtenue par emboutissage ou par pliage ou par tout autre procédé de mise en forme induisant des déformations plastiques. Pour cela, on construit le modèle polycristallin représentatif du matériau dont est constituée la pièce. On cale le modèle polycristallin à l'aide des essais mécaniques de traction ou traction/torsion ou cisaillement nécessaires. Puis, à l'aide d'une méthode de calcul telle qu'une méthode de calcul par éléments finis, incorporant le modèle polycristallin représentatif du matériau, on simule l'opération de mise en forme et on détermine les propriétés mécaniques de la pièce en chacun de ses points. A partir de ce résultat, et en utilisant une méthode de calcul adaptée connue de l'homme du métier, on détermine, par exemple, les effets sur les pièces d'un choc résultant d'une collision.

Lorsqu'on souhaite déterminer le comportement en service de différentes pièces réalisées dans le même matériau, on utilise le même modèle polycristallin représentatif du matériau pour effectuer les calculs de simulation de comportement. Ainsi, il n'est pas utile de faire des essais mécaniques pour chaque pièce.

Le procédé selon l'invention peut également être utilisé pour déterminer le comportement d'une pièce constituée d'un matériau pouvant présenter une transformation de phrase, c'est-à-dire un changement de structure cristallographique sous l'effet des sollicitations thermomécaniques qu'il subit dans les conditions de service ou de mise en forme considérées.

C'est le cas, par exemple, d'un alliage à mémoire de forme isotrope qui possède deux phases, l'une stable à haute température (l'austénite), l'autre métastable à basse température (la martensite). La diminution de la température et/ou l'application d'une sollicitation mécanique induit un passage progressif de l'austénite vers la martensite. La transformation inverse est possible de façon réversible. Cette transformation de phases s'accompagne d'une déformation anélastique qui s'ajoute à la déformation propre de chaque phase prise indépendamment.

La simulation de cette transformation de phases est réalisée en utilisant des briques "grains" (7 en l'occurrence pour un matériau isotrope), chacune étant orientée dans le repère local macroscopique (X1, X2, X3) par ses angles d'Euler $\Psi$, $\phi$ et $\varphi$. Le comportement de chaque brique est simulé par les six systèmes de glissement précédemment décrits et leurs lois d'écrouissage connues par ailleurs. Les paramètres de ces lois de comportement correspondent dans un premier temps à ceux de l'austénite.

En cours de chargement thermomécanique, en fonction d'un critère bien défini et connu, par exemple par "Leclercq S., Lexcellent C, A general macroscopic description of thermomechanical behaviour of shape memory alloys, J. Mech. Phys. Solids, Volume 44, pp 953-980, 1996", l'austénite est susceptible de se transformer en martensite, à une vitesse donnée. A chaque étape du calcul, on vérifie si ce critère est satisfait, et on attribue aux briques "grain" pour lesquelles le critère est satisfait, les caractéristiques mécaniques de la martensite (évolution des paramètres des lois de comportement des systèmes de glissement de la martensite, connue par ailleurs). La déformation de transformation de phase qui résulte de cette évolution, apparaît alors lorsqu'on applique les règles de transition d'échelle du modèle.

Le modèle qui vient d'être décrit est essentiellement un modèle numérique qui peut être mis en oeuvre par tout moyen approprié, en particulier, par ordinateur en l'intégrant dans un code de calcul par éléments finis connu en lui-même.

Ce modèle peut être utilisé de la même façon dans toute méthode de calcul de déformation de structure et, notamment, dans les méthodes de calculs aux différences finis ou dans des méthodes qui ne font intervenir qu'un point de l'objet étudié comme c'est le cas dans la modélisation du laminage de produits plats. L'homme du métier sait faire les adaptations nécessaires qui ne portent que sur l'intégration du modèle dans la méthode de calcul.

On a décrit les exemples d'application à des matériaux ayant des structures cristallographiques cubiques ou hexagonales. Mais l'invention ne se limite pas à ces exemples et l'homme du métier saura l'appliquer à d'autres structures cristallines et à des textures diverses. Elle s'applique également à des structures mixtes constituées de cristaux de natures différentes. Pour cela, il suffit de prendre en compte des briques "grain" dont une partie correspond à une structure cristalline et une autre partie correspond à une autre structure cristalline.

En résumé, le procédé selon l'invention, appliqué à un objet constitué d'un matériau déterminé et soumis pendant une période de temps déterminée à des sollicitations mécaniques et éventuellement thermiques déterminées, consiste à :

- choisir un modèle de comportement du type polycristallin conforme à l'invention, adapté au matériau,
- ajuster les paramètres du modèle de comportement à partir d'un nombre restreint d'essais mécaniques convenablement choisis,
- identifier l'effet des sollicitations mécaniques et éventuellement thermiques auxquelles l'objet est soumis pendant la période de temps considérée,
- et calculer l'effet des sollicitations en chaque point de l'objet en utilisant une méthode de calcul incorporant le modèle de comportement du matériau.

Le procédé peut être appliqué à tout type de matériau dont le comportement peut être représenté par un modèle du type polycristallin, et en particulier à tout matériau métallique.

Les sollicitations auxquelles sont soumises l'objet, qui peuvent être des efforts ou des déplacements répartis dans l'espace et dans le temps et qui peuvent être complétées par des sollicitations thermiques, peuvent être déterminées par tout moyen et en particulier par des enregistrements de mesures.

Les méthodes de calcul utilisées par le procédé sont des méthodes de calcul numérique mises en oeuvre par ordinateur à l'aide de logiciels adaptés.

**Revendications**

1. Procédé pour déterminer les effets d'une sollicitation mécanique sur un objet constitué d'un matériau solide selon lequel on calcule les déformations et les contraintes engendrées par la sollicitation mécanique en une pluralité de points de l'objet au moyen d'une méthode de calcul numérique en mode anélastique dans laquelle le comportement du matériau solide est représenté par un modèle de comportement microscopique polycristallin utilisant une pluralité de briques « grain » dont les déformations sont déterminées à partir d'une pluralité de systèmes de glissement propres au matériau solide, la trace du tenseur des déformations microscopiques étant nulle, chaque brique "grain" ayant une orientation et une fraction volumique, **caractérisé en ce que** :

   - le nombre de briques « grains » est inférieur ou égal à dix,
   - le nombre de systèmes de glissement est inférieur ou égal à six, en outre, le modèle microscopique utilise
   - jusqu'à sept briques « joint de grain » ayant chacune une orientation et une fraction volumique, et dont les déformations sont déterminées à partir d'au moins un système d'ouverture, la trace du tenseur des déformations plastiques microscopiques de chaque brique « joint de grain » étant positive,
   - au plus une brique « trou » ayant une fraction volumique variable, dont les déformations plastiques sont purement volumiques et dont la trace du tenseur des déformations plastiques microscopiques est positive.

2. Procédé selon la revendication 1, **caractérisé en ce que** les six systèmes de glissement associés à une brique « grain », définis dans un repère orthonormé associé à la brique « grain » par les normales aux plans de glissement et par les directions de glissement, sont tels que le double de la matrice d'orientation associée à chaque système de glissement ne soit constitué que de 0, 1 ou -1.

3. Procédé selon la revendication 1 ou la revendication 2, **caractérisé en ce que** pour un matériau isotrope à structure cubique, les déformations sont déterminées à partir de deux familles de trois systèmes de glissement, une première famille correspondant aux faces du cube, et la deuxième famille correspondant aux plans à 45° de ces faces, et **en ce que** le nombre de briques « grains » est égal à sept, les briques « grains » étant obtenues par symétrisation de deux briques « grains » primitives situées sur les grands cercles à 45° de la figure de pôles.

4. Procédé selon l'une quelconque des revendications 1 à 3 **caractérisé en ce que** on détermine en outre l'évolution de la texture du matériau en calculant la rotation $\underline{Q}$ du réseau cristallin de chaque brique "grain" par rapport à un repère corotationnel.

**5.** Procédé selon la revendication 4 **caractérisé en ce que**, pour un matériau isotrope à structure cubique, le nombre de briques "grain" est égal à dix.

**6.** Procédé selon l'une quelconque des revendication 1 à 3, **caractérisé en ce que** on détermine en outre l'avancement d'une transformation de phase.

**7.** Procédé selon la revendication 6, **caractérisé en ce que** on attribue à chaque brique "grain", des caractéristiques fonction de l'avancement de la transformation de phase.

**8.** Procédé selon l'une quelconque des revendications 1 à 7, **caractérisé en ce que** les orientations et les fractions volumiques des briques « grains » sont déterminées par ajustement à partir d'essais de traction biaxiale et de traction torsion.

**9.** Procédé selon l'une quelconque des revendications 1 à 8, **caractérisé en ce que**, en l'absence de brique « trou », le modèle de passage du niveau macroscopique au niveau microscopique pour une brique « grain », permettant de calculer le tenseur des contraintes microscopiques $\underline{\sigma}_g$ dans la brique « grain » en fonction du tenseur des contraintes macroscopiques $\underline{\Sigma}$, du tenseur $\underline{\varepsilon}_g^P$ des déformations plastiques microscopiques dans la brique « grain » et du tenseur $\underline{E}^P$ des déformations plastiques macroscopiques, s'écrit :

$$\underline{\sigma}_g \;=\; \underline{\Sigma} \;+\; 2\mu(1 - \beta)[\eta(\underline{1} \otimes \underline{1}) \;+\; \alpha\, \underline{1}](\underline{E}^P \;-\; \underline{\varepsilon}_g^P)$$

avec, $1/\alpha = 1 + DE_{eq}^{\max}$, et $1/\eta = 2 + 5E_{eq}^{\max}$, $E_{eq}^{\max}$ est la valeur maximale atteinte par le deuxième invariant de von Mises lors de la déformation.

**10.** Procédé selon l'une quelconque des revendications 1 à 9, **caractérisé en ce que** la méthode de calcul numérique est une méthode de calcul par éléments finis et **en ce que** à chaque point d'intégration de la méthode de calcul par éléments finis, on associe une seule brique « grain » et éventuellement une brique « joint de grain » ou une brique « trou », de telle sorte que la répartition des briques soit homogène.

**11.** Procédé selon l'une quelconque des revendications 1 à 10, **caractérisé en ce que** la méthode de calcul numérique est une méthode de calcul mécanique ou thermomécanique, faisant intervenir le temps.

**12.** Procédé selon la revendication 11, **caractérisé en ce que** on utilise une brique « trou » et qu'à l'instant initial du calcul numérique, la fraction volumique de la brique « trou » n'est pas nulle.

**13.** Procédé selon l'une quelconque des revendications 1 à 11, **caractérisé en ce que** le nombre de briques "joint de grain" est supérieur ou égal à un, et **en ce que** on définit un critère tel que, lorsqu'en un point de l'objet, le critère est satisfait, on attribue au point considéré une résistance mécanique du matériau nulle, de façon à simuler la présence d'une fissure.

**14.** Procédé selon l'une quelconque des revendications 1 à 8 et 10 à 12, **caractérisé en ce que** on utilise une brique "trou", et **en ce que** on définit un critère tel que, lorsqu'en un point de l'objet, le critère est satisfait, on attribue au point considéré une résistance mécanique du matériau nulle, de façon à simuler la présence d'une fissure.

**15.** Procédé selon l'une quelconque des revendications 1 à 14, **caractérisé en ce que** l'objet en matériau solide est une pièce métallique et **en ce que** la sollicitation mécanique est la sollicitation mécanique associée à une opération de mise en forme par déformation plastique telle que notamment l'emboutissage, l'étirage, le laminage, le cintrage ou le forgeage.

**16.** Procédé selon l'une quelconque des revendications 1 à 15, **caractérisé en ce que** l'objet en matériau solide est une pièce métallique et **en ce que** la sollicitation mécanique est une sollicitation mécanique correspondant à l'utilisation de la pièce métallique.

**17.** Procédé selon la revendication 16, **caractérisé en ce que** l'utilisation en service de la pièce engendre au moins un phénomène, pris parmi les phénomènes de fluage, de fatigue et de fatigue-fluage.

**Claims**

**1.** Method for determining the effects of a mechanical stress on an object formed from a solid material, according to which the deformations and stresses caused by the mechanical stress is calculated at a plurality of points of the object by means of a numeric calculation method in anelastic mode, in which the behaviour of the solid material is represented by a polycrystalline microscopic behaviour model using a plurality of "grain" blocks, the deformations of which are determined on the basis of a plurality of sliding systems particular to the solid material, wherein the trace of the tensor of the microscopic deformations is zero, each "grain" block having an orientation and volume fraction,
**characterised in that**:

- the number of "grain" blocks is less than or equal to ten,
- the number of sliding systems is less than or equal to six, moreover, the microscopic model uses:
- up to seven "grain boundary" blocks, each having an orientation and a volume fraction, and the deformations of which are determined on the basis of at least one opening system, the trace of the tensor of the microscopic plastic deformations of each "grain boundary" block being positive,
- at most one "hole" block having a variable volume fraction, of which the plastic deformations are purely volume-related and of which the trace of the tensor of the microscopic plastic deformations is positive.

**2.** Method according to claim 1, **characterised in that** the six sliding systems, which are associated with a "grain" block and defined in an orthonormed marker associated with the "grain" block by normals to the sliding planes and by the sliding directions, are such that double the orientation matrix associated with each sliding system is only formed by 0, 1 or -1.

**3.** Method according to claim 1 or claim 2, **characterised in that** in the case of an isotope material of cubic structure the deformations are determined on the basis of two families of three sliding systems, wherein a first family corresponds to the faces of the cube and the second family corresponds to the planes at 45° of these faces, and **in that** the number of "grain" blocks is equal to seven, wherein the "grain" blocks are obtained by balancing the two primary "grain" blocks located on the great circles at 45° of the pole figures.

**4.** Method according to any one of claims 1 to 3, **characterised in that** the development of the texture of the material is additionally determined by calculating the rotation $\underline{Q}$ of the crystalline lattice of each "grain" block in relation to a co-rotational marker.

**5.** Method according to claim 4, **characterised in that** in the case of an isotope material of cubic structure, the number of "grain" blocks is equal to ten.

**6.** Method according to any one of claims 1 to 3, **characterised in that** the progress of a phase transformation is additionally determined.

**7.** Method according to claim 6, **characterised in that** each "grain" block is assigned characteristics dependent on the progress of the phase transformation.

**8.** Method according to any one of claims 1 to 7, **characterised in that** the orientation and volume fractions of the "grain" blocks are determined by adjustment on the basis of biaxial pull and torsional pull tests.

**9.** Method according to any one of claims 1 to 8, **characterised in that** in the absence of a "hole" block, the model of passage from the macroscopic level to the microscopic level for a "grain" block, which enables the tensor of the microscopic stresses $\underline{\sigma}_g$ in the "grain" block as a function of the tensor of the macroscopic stresses $\underline{\Sigma}$, of the tensor $\underline{\varepsilon}^P_g$ of the microscopic plastic deformations in the "grain" block and of the tensor $\underline{E}^P$ of the macroscopic plastic deformations, reads:

$$\underline{\sigma}_g = \underline{\Sigma} + 2\mu(1 - \beta)\,[\eta\,(\underline{1} \otimes \underline{1}) + \alpha\,\underline{1}]\,(\underline{E}^{\mathrm{p}} - \underline{\varepsilon}^{\mathrm{p}}_g)$$

where $1/\alpha = 1 + DE^{\max}_{eq}$, and $1/\eta = 2 + 5E^{\max}_{eq}$, $E^{\max}_{eq}$ is the maximum value reached by the second von Mises invariant during deformation.

10. Method according to any one of claims 1 to 9, **characterised in that** the numeric method of calculation is a method of calculation by finite elements, and **in that** a single "grain" block and possibly a "grain boundary" block or a "hole" block are associated with each integration point of the calculation method by finite elements such that the distribution of the blocks is uniform.

11. Method according to any one of claims 1 to 10, **characterised in that** the numeric method of calculation is a mechanical or thermomechanical method of calculation with the introduction of time.

12. Method according to claim 11, **characterised in that** a "hole" block is used and at the initial instant of the numeric calculation the volume fraction of the "hole" block is not zero.

13. Method according to any one of claims 1 to 11, **characterised in that** the number of "grain boundary" blocks is greater than or equal to one, and **in that** a criterion is defined such that, when the criterion is met at a point of the object, a mechanical resistance of the zero material is attributed to the considered point in order to simulate the presence of a crack.

14. Method according to any one of claims 1 to 8 and 10 to 12, **characterised in that** a "hole" block is used, and **in that** a criterion is defined such that, when the criterion is met at a point of the object, a mechanical resistance of the zero material is attributed to the considered point in order to simulate the presence of a crack.

15. Method according to any one of claims 1 to 14, **characterised in that** the object made of solid material is a piece of metal, and **in that** the mechanical stress is the mechanical stress associated with a forming operation by plastic deformation such as in particular embossing, drawing, rolling, bending or forging.

16. Method according to any one of claims 1 to 15, **characterised in that** the object made of solid material is a piece of metal, and **in that** the mechanical stress is a mechanical stress corresponding to the use of the piece of metal.

17. Method according to claim 16, **characterised in that** the use of the piece during operation causes at least one process taken from plastic flow, fatigue and fatigue-plastic flow processes.

**Patentansprüche**

1. Verfahren zur Bestimmung der Wirkungen einer mechanischen Belastung auf ein aus einem festen Werkstoff bestehendes Objekt, bei welchem man die Verformungen und die Spannungen, die durch die mechanische Belastung an einer Mehrzahl von Punkten des Objekts erzeugt werden, mit Hilfe einer numerischen Rechenmethode im anelastischen Modus berechnet, bei der das Verhalten des festen Werkstoffs durch ein polykristallines mikroskopisches Verhaltensmodell dargestellt wird, das eine Mehrzahl von "Korn"-Steinen verwendet, deren Verformungen ausgehend von einer Mehrzahl von Gleitsystemen des festen Werkstoffs bestimmt werden, wobei die Spur des Tensors der mikroskopischen Verformungen null ist, wobei jeder "Korn"-Stein eine Ausrichtung und einen Volumensanteil aufweist, **dadurch gekennzeichnet, dass**:

   - die Anzahl von "Korn"-Steinen kleiner als oder gleich zehn ist,
   - die Anzahl von Gleitsystemen kleiner als oder gleich sechs ist, das mikroskopische Modell außerdem verwendet:
   - bis zu sieben "Kornfugen"-Steine, die jeweils eine Ausrichtung und einen Volumensanteil aufweisen und deren Verformungen ausgehend von mindestens einem Öffnungssystem bestimmt werden, wobei die Spur des Tensors der mikroskopischen plastischen Verformungen jedes "Kornfugen"-Steins positiv ist,
   - höchstens ein "Loch"-Stein mit einem veränderlichen Volumensanteil, dessen plastische Verformungen rein volumensmäßig sind und bei dem die Spur des Tensors der mikroskopischen plastischen Verformungen positiv ist.

**2.** Verfahren nach Anspruch 1, **dadurch gekennzeichnet, dass** die sechs, einem "Korn"-Stein zugeordneten Gleitsysteme, die in einem dem "Korn"-Stein zugeordneten orthonormierten Bezugssystem durch die Normalen auf die Gleitebenen und durch die Gleitrichtungen definiert sind, so beschaffen sind, dass das Zweifache der jedem dem Gleitsystem zugeordneten Ausrichtungsmatrix nur aus 0, 1 oder -1 besteht.

**3.** Verfahren nach Anspruch 1 oder Anspruch 2, **dadurch gekennzeichnet, dass** bei einem isotropen Werkstoff mit kubischer Struktur die Verformungen ausgehend von zwei Familien von drei Gleitsystemen bestimmt werden, wobei eine erste Familie den Seiten des Würfels entspricht und die zweite Familie den Ebenen in 45° zu diesen Seiten entspricht, und dass die Anzahl von "Korn"-Steinen gleich sieben ist, wobei die "Korn"-Steine durch Symmetrisierung von zwei Grund-"Korn"-Steinen erhalten werden, die auf den großen Kreisen in 45° der Polfigur gelegen sind.

**4.** Verfahren nach einem der Ansprüche 1 bis 3, **dadurch gekennzeichnet, dass** man außerdem die Änderung der Textur des Werkstoffs bestimmt, indem man die Drehung Q des Kristallgitters jedes "Korn"-Steins bezüglich eines mitdrehenden Bezugssystems bestimmt.

**5.** Verfahren nach Anspruch 4, **dadurch gekennzeichnet, dass** bei einem isotropen Werkstoff mit kubischer Struktur die Anzahl von "Korn"-Steinen gleich zehn ist.

**6.** Verfahren nach einem der Ansprüche 1 bis 3, **dadurch gekennzeichnet, dass** man außerdem die Vorbewegung einer Phasentransformation bestimmt.

**7.** Verfahren nach Anspruch 6, **dadurch gekennzeichnet, dass** man jedem "Korn"-Stein von der Vorbewegung der Phasentransformation abhängige Merkmale zuordnet.

**8.** Verfahren nach einem der Ansprüche 1 bis 7, **dadurch gekennzeichnet, dass** die Ausrichtungen und die Volumensanteile der "Korn"-Steine durch Anpassung ausgehend von biaxialen Zug- und Zug-Torsions-Versuchen bestimmt werden.

**9.** Verfahren nach einem der Ansprüche 1 bis 8, **dadurch gekennzeichnet, dass** das Modell des Übergangs des makroskopischen Niveaus auf das mikroskopische Niveau bei einem "Korn"-Stein bei Fehlen eines "Loch"-Steins, das die Berechnung des Tensors der mikroskopischen Spannungen $\underline{\sigma}_g$ in dem "Korn"-Stein in Abhängigkeit von dem Tensor der makroskopischen Spannungen $\underline{\Sigma}$, des Tensors $\underline{\underline{\varepsilon}}_g^p$ der mikroskopischen plastischen Verformungen in dem "Korn"-Stein und des Tensors $\underline{E}^p$ der makroskopischen plastischen Verformungen, sich schreibt:

$$\underline{\sigma}_g = \underline{\Sigma} + 2\mu(1 - \beta)[\eta(\underline{1} \otimes \underline{1}) + \alpha\,\underline{1}](\underline{E}^p - \underline{\varepsilon}_g^p)$$

worin $1/\alpha = 1 + DE_{eq}^{max}$ und $1/\eta = 2 + 5E_{eq}^{max}$, wobei $E_{eq}^{max}$ der von der zweiten Von Mises-Invarianten bei der Verformung erreichte maximale Wert ist.

**10.** Verfahren nach einem der Ansprüche 1 bis 9, **dadurch gekennzeichnet, dass** die numerische Rechenmethode eine Rechenmethode durch endliche Elemente ist und dass man jedem Integrationspunkt der Rechenmethode durch endliche Elemente einen einzigen "Korn"-Stein und gegebenenfalls einen "Kornfugen"-Stein oder einen "Loch"-Stein zuordnet, so dass die Verteilung der Steine homogen ist.

**11.** Verfahren nach einem der Ansprüche 1 bis 10, **dadurch gekennzeichnet, dass** die numerische Rechenmethode eine mechanische oder thermomechanische Rechenmethode ist, in der die Zeit auftritt.

**12.** Verfahren nach Anspruch 11, **dadurch gekennzeichnet, dass** man einen "Loch"-Stein verwendet und zum Anfangszeitpunkt der numerischen Berechnung der Volumensanteil des "Loch"-Steins nicht null ist.

**13.** Verfahren nach einem der Ansprüche 1 bis 11, **dadurch gekennzeichnet, dass** die Anzahl von "Kornfugen"-Steinen größer als oder gleich eins ist und dass man ein solches Kriterium definiert, dass, wenn das Kriterium an einem Punkt des Objekts erfüllt ist, man dem betreffenden Punkt eine mechanische Festigkeit des Werkstoffs von null zuteilt, so dass das Vorhandensein eines Risses simuliert wird.

14. Verfahren nach einem der Ansprüche 1 bis 8 und 10 bis 12, **dadurch gekennzeichnet, dass** man einen "Loch"-Stein verwendet, und dass man ein solches Kriterium definiert, dass, wenn das Kriterium an einem Punkt des Objekts erfüllt ist, man dem betreffenden Punkt eine mechanische Festigkeit des Werkstoffs von null zuteilt, so dass das Vorhandensein eines Risses simuliert wird.

15. Verfahren nach einem der Ansprüche 1 bis 14, **dadurch gekennzeichnet, dass** das Objekt aus festem Werkstoff ein metallisches Werkstück ist und dass die mechanische Belastung die mechanische Belastung ist, die mit einem Arbeitsgang der Formgebung durch plastische Verformung wie insbesondere Tiefziehen, Ziehen, Walzen, Biegen oder Schmieden, verbunden ist.

16. Verfahren nach einem der Ansprüche 1 bis 15, **dadurch gekennzeichnet, dass** das Objekt aus festem Werkstoff ein metallisches Werkstück ist und dass die mechanische Belastung eine mechanische Belastung ist, die der Verwendung des metallischen Werkstücks entspricht.

17. Verfahren nach Anspruch 16, **dadurch gekennzeichnet, dass** die Verwendung des Werkstücks im Betrieb mindestens eine Erscheinung erzeugt, die aus den Erscheinungen Kriechen, Ermüdung und Kriechermüdung grnommen ist.

FIG.1

FIG.2

FIG.3

FIG.4

FIG.5

FIG.6

FIG.7

FIG.8

FIG.9

EP 1 656 546 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *Revue Européenne des éléments finis,* 1994, vol. 3 (4), 515-541
- **ONCK ; VAN DER GIESSEN.** Growth of an initially sharp crack by grain boundary cavitation. *Journal of the Mechanics and Physics of Solids,* 1999, vol. 47, 99-139
- **PHILIPPE GEYER.** Comportement élasto-visco-plastique de tubes en Zircaloy-4 : approche expérimentale et modélisation micromécanique. *thèse de l'Ecole des Mines de Paris,* 09 Décembre 1999
- **LECLERCQ S. ; LEXCELLENT C.** A general macroscopic description of thermomechanical behaviour of shape memory alloys. *J. Mech. Phys. Solids,* 1996, vol. 44, 953-980